Europäisches Patentamt

European Patent Office

Office européen des brevets

(19)

(11) **EP 0 661 672 B1**

(12)

# FASCICULE DE BREVET EUROPEEN

(45) Date de publication et mention
de la délivrance du brevet:
**20.03.2002 Bulletin 2002/12**

(51) Int Cl.⁷: **G06T 15/10**

(21) Numéro de dépôt: **94203683.1**

(22) Date de dépôt: **19.12.1994**

(54) **Procédé et dispositif de traitement d'image pour construire à partir d'une image source une image cible avec changement de perspective**

Bildverarbeitungsverfahren und -gerät zur Erzeugung eines Zielbildes von einem Quellenbild mit Veränderung der Perspektive

Picture processing process and device for building a target image from a source image with perspective change

(84) Etats contractants désignés:
**DE FR GB IE**

(30) Priorité: **29.12.1993 FR 9315805**

(43) Date de publication de la demande:
**05.07.1995 Bulletin 1995/27**

(73) Titulaire: **Koninklijke Philips Electronics N.V.
5621 BA Eindhoven (NL)**

(72) Inventeurs:
• **Florent, Raoul
F-75008 Paris (FR)**

• **Lelong, Pierre
F-75008 Paris (FR)**

(74) Mandataire: **Lottin, Claudine et al
Société Civile S.P.I.D.
156, Boulevard Haussmann
75008 Paris (FR)**

(56) Documents cités:
**EP-A- 0 220 461        US-A- 5 586 231**

• **'Petit Larousse illustré', 1983, LAROUSSE, PARIS, FRANCE**

EP 0 661 672 B1

**Description**

L'invention concerne un procédé de traitement d'image numérique pour construire au moyen d'une transformation géométrique de perspective appliquée à une image dite image source, une image calculée, dite image cible, qui représente l'image source reconstruite avec des modifications d'angles de site, d'azimut, et éventuellement de facteur d'échelle vis-à-vis de l'image source. L'invention concerne également un dispositif de traitement d'images numériques qui met en oeuvre ce procédé.

L'invention trouve son application dans la réalisation de système de surveillance comprenant un certain nombre de caméras fixes, disposées de manière à ce que leurs champs de vue individuels fusionnent pour former un champ de vue de grand angle, pour l'observation d'une scène panoramique.

Une méthode, pouvant conduire à un dispositif, pour réaliser une transformation géométrique de perspective, est déjà connue de la publication "Computer Image Processing and Recognition" par Ernest L.HALL, dans "Academic Press 1979, "A Subsidiary of Harcourt Brace Jonanovitch Publishes, New-York, London, Toronto, Sydney, San Francisco" -Chapitre 3, pp.76 et suivantes, particulièrement pp.76-88. Cette publication enseigne les définitions de ce qu'est la géométrie perspective et de ce que sont une transformation de perspective et une transformation inverse de perspective, selon que l'on considère que l'on passe des points d'une image aux rayons lumineux passant par ces points, ou bien que l'on passe des rayons lumineux aux points de l'image. L'opération de passer des points d'une image aux rayons qui correspondent à ces points est appelée "transformation de perspective". Cette publication enseigne une méthode d'abord pour mettre en forme le problème du passage des points aux rayons, et ensuite pour résoudre ce problème de "transformation de perspective" en utilisant des matrices 4 x 4. La résolution de ce problème se fait par un calcul analytique complet à partir de ces matrices.

La formalisation du problème au moyen de matrices 4 x 4 est fondée sur les motifs suivants : théoriquement les transformations de perspective sont des problèmes géométriques qui se posent dans l'espace à 3 dimensions, donc utilisant 3 types de coordonnées seulement ; dans cette publication, on enseigne que la transformation de perspective n'est pas une transformation linéaire, d'où il résulte des difficultés de maniement des équations ; cette publication enseigne alors que la résolution des équations peut cependant être simplifiée, en linéarisant ces équations, ce qui est possible si l'on ajoute une quatrième variable ; ainsi ces équations linéarisées peuvent être résolues de manière analytique.

Néanmoins, la méthode enseignée par la publication citée conduit à des solutions dont les formulations sont extrêmement complexes. Des exemples sont donnés tout au long de la publication citée.

Or, selon la présente invention, une première contrainte est imposée qui implique la mise en oeuvre de transformations de perspective en temps réel, c'est-à-dire pendant le traitement d'une image au rythme de 16 à 25 images formées par seconde. Il apparaît que les solutions formulées selon l'enseignement de la publication citée sont particulièrement difficiles à mettre en oeuvre en temps réel, vu leur complexité.

Il existe cependant dans le commerce des dispositifs électroniques appelés "puces de transformation" (en anglais Transform CHIPS) capables d'effectuer des transformations géométriques et qui sont utilisables pour résoudre le problème des transformations de perspective. On connaît notamment un produit de commerce référencé TMC 2302 disponible chez TRW Company dont l'adresse est PO Box 2472, LA JOLLA, CA 92 038 (US). Ce produit est capable d'effectuer en temps réel les calculs très compliqués relatifs aux transformations géométriques nécessaires aux transformations de perspective envisagées.

Cependant, ces puces de transformation sont coûteuses, particulièrement du fait qu'elles ne sont pas largement utilisées ; il y a peu d'espoir de voir leur coût baisser bientôt. De plus, il faut bien considérer que leur mise en oeuvre au sein d'un dispositif de traitement de signal tel que celui qui est envisagé selon l'invention, implique un certain nombre de contraintes difficiles à maîtriser. Néanmoins, une fois maîtrisées ces contraintes, la reconstruction de l'image cible comme définie dans le préambule de la partie introductive de la demande donne un résultat que l'on pourrait appeler reconstruction selon une "perspective exacte". En utilisant les puces de transformation, les objets dans l'image cible sont vus selon une perspective géométrique très proche de celle que l'on obtiendrait si l'on formait cette image cible directement, c'est-à-dire au moyen d'une caméra réelle orientée avec les paramètres produisant la perspective géométrique choisie pour cette image dite cible.

Un but de l'invention est donc de fournir un dispositif qui remplit la fonction de reconstruction d'une image cible, en s'affranchissant de la nécessité d'utiliser des transformations géométriques complexes qui peuvent exclusivement être réalisées au moyen des produits connus du commerce, à grand frais et avec des difficultés techniques annexes difficiles à surmonter.

Selon l'invention ce but est atteint au moyen d'un procédé de traitement d'image numérique defini dans la revendication 1.

Un avantage du procédé selon l'invention est qu'il peut être mis en oeuvre en utilisant uniquement des cartes de mémoires. Ces cartes de mémoires sont à ce jour peu coûteuses, et leurs prix sont en continuelle diminution, pour des qualités et des densités qui s'améliorent parallèlement continuellement. Ainsi, les fonctions nécessaires à la mise en oeuvre des "transformations de perspective" proposées selon l'invention, sont très faciles à enregistrer, ou tabuler, sur des cartes de mémoires (en anglais LUT pour LOOK-UP-TABLE).

Néanmoins par le moyen du procédé selon l'invention, l'utilisateur obtient une image cible reconstruite qui présente, vis-à-vis d'une image qui serait directement obtenue avec une caméra réelle, des petites différences géométriques.

Mais il est apparu à l'usage, au cours de tests proposés à des observateurs ne sachant pas par quels moyens l'image qu'on leur montrait avait été obtenue, que les images cibles reconstruites selon l'invention avaient autant la faveur des observateurs testés que ne l'avaient les images obtenues au moyen d'une caméra réelle ayant les mêmes orientations et zoom que les images cibles sous test obtenues selon l'invention. Les observateurs ne perçoivent pas de façon négative les très faibles différences géométriques qui s'introduisent lors des calculs de l'image cible selon l'invention, et trouvent au contraire que l'image est d'une grande qualité. Les observateurs avertis ont eux-mêmes certaines difficultés à détecter les différences qui existent entre les deux sortes d'images, réelles ou reconstruites.

Ceci est un grand avantage, car le procédé selon l'invention peut être mis en oeuvre au moyen d'un petit nombre de modules simples dans lesquels les calculs sont réalisés de façon très aisée. Donc, un dispositif formé de ces modules pour mettre en oeuvre le procédé est extrêmement facile à fabriquer, d'un coût exceptionnellement réduit comparé à des dispositifs qui incluraient les "puces de transformations" du commerce et fournit une image d'une qualité attractive.

L'invention est décrite ci-après en détail en référence aux figures schématiques annexées parmi lesquelles :

la FIG.1A représente une image dite source, en perspective, dans un repère tridimensionnel orthonormé fixe, dit repère absolu, ainsi que les coordonnées sphériques de son centre et d'un point courant ; la FIG.1B représente une image dite cible, en perspective, dans le même repère absolu, ainsi que les coordonnées sphériques de son centre et d'un pixel courant ;

la FIG.2A représente l'image source, en perspective, dans un repère orthonormé individuel de même origine que le repère absolu ; la FIG.2B représente l'image cible, en perspective, dans un repère orthonormé individuel de même origine que le repère absolu ;

la FIG.3A représente la projection de l'image source dans un des plans de son repère individuel, et la FIG.3B représente l'image source parallèlement à un autre plan de son repère individuel ;

la FIG.4A représente la projection de l'image cible dans un plan de son repère orthonormé individuel, et la FIG. 4B représente l'image cible parallèlement à un autre plan de son repère individuel ;

la FIG.5A représente la projection de l'image source dans un plan vertical du repère absolu contenant l'axe optique de cette image source, et la FIG.5B représente la projection de cette image source dans le plan horizontal de ce repère absolu ;

la FIG.6A représente la projection de l'image cible dans un plan vertical du repère absolu contenant l'axe optique de cette image cible, et la FIG.6B représente la projection de cette image cible dans le plan horizontal de ce repère absolu ;

la FIG.7 montre en perspective le résultat de la première transformation, réalisée au moyen d'une rotation, appliquée à l'image cible, pour calculer la fonction $G^{-1}$;

la FIG.8A illustre en perspective l'effet de la première transformation réalisée au moyen d'une rotation appliquée à l'image cible, dans le calcul de la fonction $G^{-1}$ et la FIG.8B illustre en perspective l'effet de la seconde transformation réalisée au moyen d'une translation appliquée au résultat de la rotation pour réaliser le calcul de la fonction $G^{-1}$ simplifiée selon l'invention ;

la FIG.9A illustre dans un plan vertical l'action des différentes transformations appliquées à l'image cible pour le calcul de la fonction $G^{-1}$ et la FIG.9B illustre en perspective l'action des deux transformations de perspectives $G^{-1}$ et $F$ ;

la FIG.10A représente la projection dans le plan horizontal du repère absolu de deux images sources adjacentes, et d'une image cible reconstruite à partir de ces deux images sources ; la FIG.10B représente à part le plan horizontal du repère absolu ; la FIG.10C représente, dans un plan perpendiculaire aux plans images sources, trois images sources adjacentes produites par trois caméras réelles fixes, dont les champs de vue fusionnent ;

la FIG.11A représente la délimitation, dans deux images sources adjacentes, d'une partie à cheval sur ces deux images, au moyen de paramètres fixant un angle de site, un angle d'azimut et un facteur d'échelle, pour la reconstruction d'une image cible telle que représentée sur la FIG.11B ;

la FIG.12A représente une image source gauche ; la FIG.12B une image source droite adjacente à la précédente ; la FIG.12C représente l'image cible qui serait obtenue par simple mise en coïncidence des bords respectivement droit et gauche des images sources gauche et droite ; et la FIG.12D représente l'image cible obtenue en appliquant à ces deux images sources de départ le système de traitement d'image selon l'invention ;

la FIG.13 représente en blocs fonctionnels, un schéma d'un dispositif de traitement d'image du type calculateur d'adresse selon l'invention ;

la FIG.14 représente en blocs fonctionnels un schéma d'un dispositif de traitement d'image, incluant un calculateur d'adresse selon la FIG.13, appliqué à plusieurs images sources ;

la FIG.15 représente en blocs fonctionnels un système de calcul des fonctions trigonométriques pour mettre en oeuvre la fonction $G^{-1}$.

## A/ Définition du problème résolu par l'invention

### A1/Exposé des données géométriques du problème

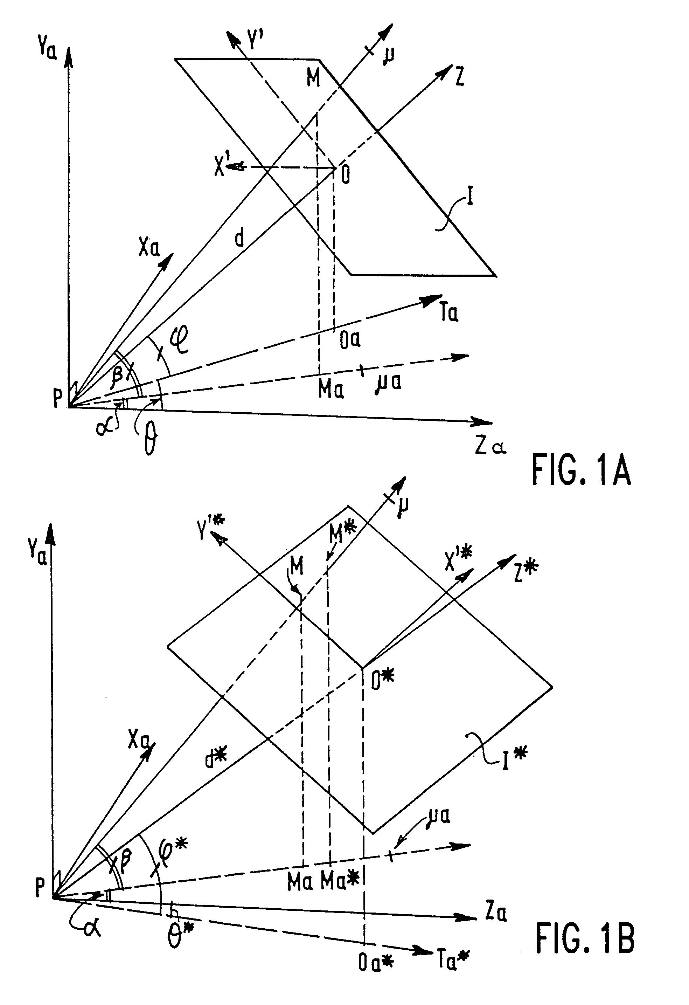

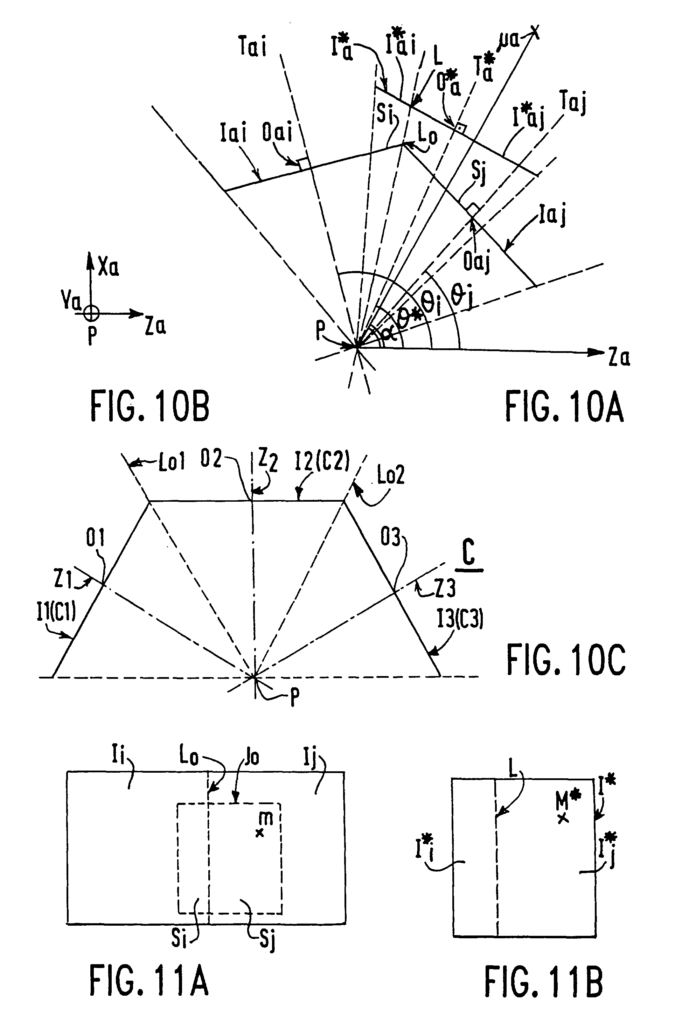

En référence aux FIG.1A et 1B et 10B, on désigne par (PXa, PYa, PZa) un repère fixe tridimensionnel orthonormé, étiqueté "repère absolu", d'origine P, qui servira de référence dans l'espace à 3 dimensions, tout au long de l'exposé qui va suivre. On appellera ci-après le plan (PXa, PZa) : **"plan horizontal".** L'axe PYa est donc perpendiculaire audit plan horizontal. On appellera ci-après cet axe : "axe vertical". On appellera aussi : "plan vertical", tout plan contenant cet axe PYa.

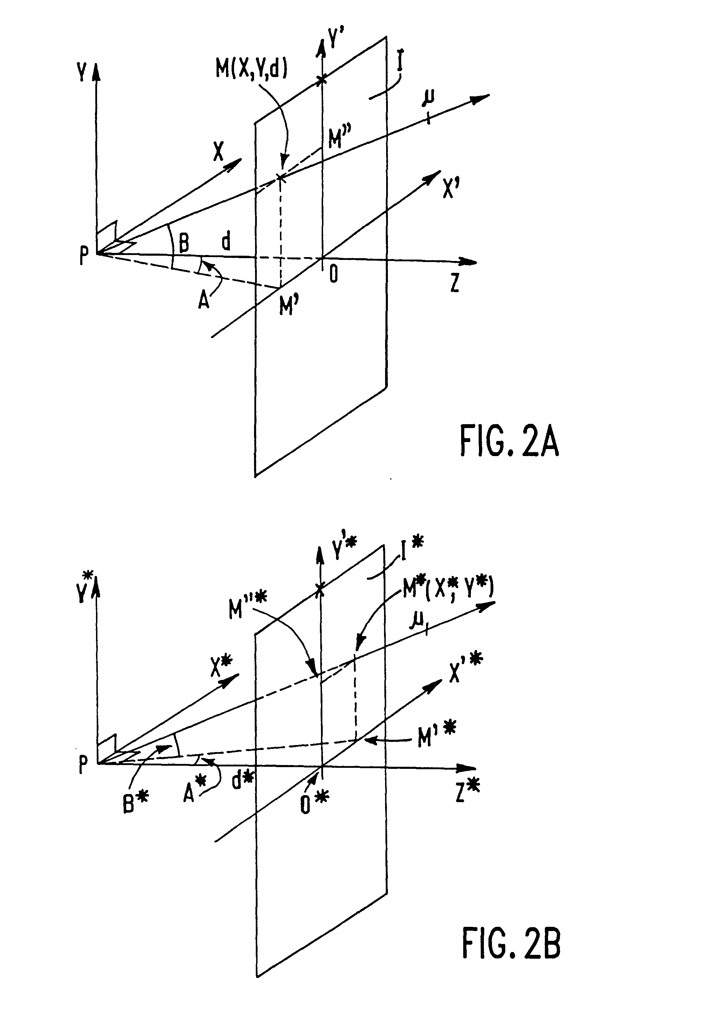

En référence à la FIG.1A et avec la FIG.2A, on désigne par I une image plane numérique de départ, étiquetée "image source "I, formée optiquement, c'est-à-dire ayant un centre optique P et un axe optique PZ lequel intersecte le plan de l'image source I en un point O. Ce point O est le centre géométrique de l'image source I, et l'axe optique PZ est perpendiculaire à l'image source I, en O.

Dans la FIG.1A et la FIG.2A, le **centre optique** P, encore appelé **"point de fuite",** est défini comme le point tel que, tout rayon lumineux $P_\mu$, issu d'un point objet lumineux $\mu$ de l'espace et s'appuyant sur ce point de fuite P, traverse l'optique qui donne lieu à l'image source numérique, sans déviation. Supposons donc un point objet $\mu$ dans l'espace, ayant son image en un point M dans l'image source numérique I, et soit P le point de fuite correspondant à cette image numérique, il résulte des propriétés du point de fuite P que les points $\mu$, M, P sont alignés, et que le rayon lumineux $P_\mu$ est rectiligne.

Dans l'exposé qui va suivre, on va traiter le cas simple où l'image source numérique I est carrée ou rectangulaire. L'homme du métier pourra aisément généraliser l'invention à d'autres images numériques. Par image numérique, on entend une image formée de pixels affectés chacun d'un niveau de luminance Q. Le niveau de luminance peut être repéré par exemple sur une échelle de niveaux de luminance graduée de 1 à 256. Les pixels les plus lumineux ou clairs sont affectés des niveaux de luminance les plus grands, et les pixels les moins lumineux, ou pixels sombres, sont affectés des niveaux de luminance les plus petits sur cette échelle.

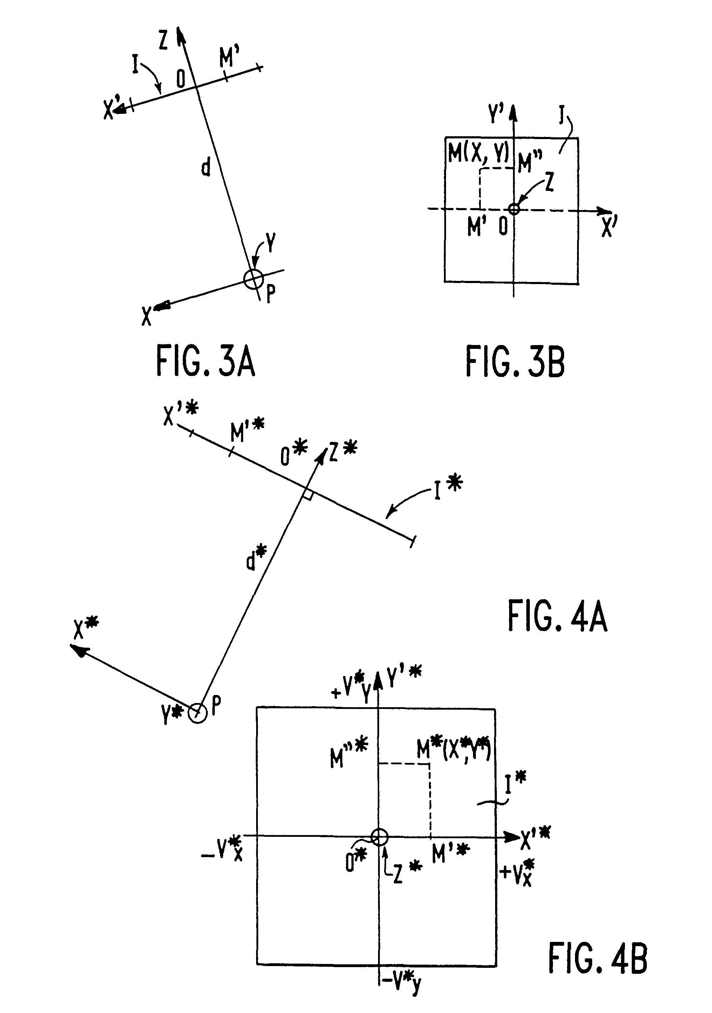

En référence à la FIG.2A et aux FIG.3A et 3B, l'image source I est munie d'un repère individuel (PX, PY, PZ) tridimensionnel, orthonormé, qui est attaché à cette image I particulière. L'origine du repère individuel (PX, PY, PZ) est choisie au point de fuite P de l'image source I, l'axe optique PZ de l'image source I est un des axes du repère. Ce repère individuel est étiqueté **"repère source"**.

Dans la FIG.3A, le plan (PZ, PX) du repère individuel source est confondu avec le plan de la feuille du dessin. L'image source I, qui est perpendiculaire à l'axe PZ est représentée par un segment. L'axe PY est perpendiculaire au plan de la feuille du dessin. La grandeur d = PO est étiquetée "**facteur d'échelle de l'image source**". Dans la figure 3B, le plan (PX, PY) du repère individuel source est parallèle au plan de la feuille du dessin, et l'image source I, ici carrée, est représentée dans ce plan. L'axe PZ est perpendiculaire à ce plan en O. Les axes PX, PY du repère individuel source ont pour projections OX', OY' dans le plan image source ; les axes PX, PY, et donc leurs projections OX', OY' sont choisies respectivement parallèles aux lignes et aux colonnes de pixels de l'image source I numérisée. Le centre géométrique O est choisi en coïncidence avec un pixel.

En référence aux FIG.2A et 3B, tout point M de l'image source I a pour projections dans le repère OX', OY', respectivement, des points M' et M", tels que

MM' = Y

et MM" = X.

Ainsi, tout point M de l'image source I, a pour coordonnées :

M → (X, Y) dans le repère (OX', OY')

et M → (X, Y, d) dans le repère source (PX, PY, PZ).

En référence à la FIG.1B et aux FIG.2B, 4A et 4B, on détermine par ailleurs, dans l'espace à 3 dimensions, un autre plan image étiqueté **"plan image cible"** que l'on désigne par I* (I étoile). Cette image cible I* est une image numérique, choisie pour des raisons de simplification de l'exposé, de même forme géométrique que l'image source I, c'est-à-dire carrée ou rectangulaire. D'autre part, cette image cible est également associée à un centre optique ou point de fuite, et à un axe optique passant par ce point de fuite.

Par hypothèse, en référence aux FIG.1B et 2B, on se fixe que le point de fuite de l'image cible I* est le point P, c'est-à-dire que les points de fuite des images source I, et cible I*, sont confondus. On désigne par PZ* l'axe optique de l'image cible I* qui intersecte le plan de cette image cible I* en un point O*. Ce point O* est le centre géométrique de l'image cible I* et l'axe optique PZ* est perpendiculaire au plan de l'image cible I*, en O*.

Le point de fuite P a les mêmes propriétés vis-à-vis de la formation de l'image cible I* que de l'image source I, c'est-à-dire que le point image M* dans I* d'un point objet μ de l'espace, se trouve à l'intersection du rayon lumineux Pμ et du plan image cible I*, et que les points PM*μ sont alignés sur le rayon lumineux Pμ rectiligne.

En référence aux FIG.2B, 4A et 4B, l'image cible I* est munie d'un repère individuel (PX*, PY*, PZ*) tridimensionnel orthonormé qui est attaché à cette image cible I* particulière. L'origine du repère individuel (PX*, PY*, PZ*) est choisi au point de fuite commun P des images source I et cible I* ; et l'axe optique PZ* de l'image cible I* est un des axes de ce repère. Le repère individuel est étiqueté **"repère cible"**.

Dans la FIG.4A, le plan (PZ*, PX*) du repère cible est confondu avec le plan de la feuille du dessin. L'image cible I*, qui est perpendiculaire à l'axe PZ*, est représentée par un segment. L'axe PY* est perpendiculaire au plan de la feuille du dessin. La grandeur d* = PO* est étiqueté **"facteur d'échelle de l'image cible"**.

Dans la FIG.4B, le plan (PX*, PY*) du repère individuel cible est parallèle au plan de la feuille du dessin, et l'image cible I*, ici carrée comme l'image source I, est représentée dans ce plan. L'axe PZ* est perpendiculaire à ce plan en O*. Les axes PX* et PY* du repère cible ont pour projections O*X'* et O*Y'* dans le plan image cible ; les axes PX*, PY* et donc leurs projections O*X'*, O*Y'* sont choisis respectivement parallèles aux lignes et aux colonnes de pixels de l'image cible numérique. Le centre géométrique O* est choisi en coïncidence avec un pixel.

En référence aux FIG.2B et 4B, tout pixel M* de l'image cible a pour projections, dans le repère (O*X'*, O*Y'*), respectivement les points M'* et M''*. Ainsi tout pixel M* de l'image cible I* a pour coordonnées :

M* → (X*, Y*) dans le repère (O*X'*, O*Y'*)

et M* → (X*, Y*, d*) dans le repère cible (PX*, PY*, PZ*).

En référence aux FIG.1A et 1B, on se fixe aussi par hypothèse, que les points de fuite de toutes les images source et cible sont confondus avec l'origine P du repère absolu (PXa, PYa, PZa). En référence à la FIG.1A, on peut définir les paramètres angulaires qui relient le repère individuel de l'image source I au repère absolu. La FIG.1A représente le plan image source I en perspective, dans l'espace à 3 dimensions, muni du repère (OX', OY') dans son plan, son centre géométrique O étant situé à la distance d (ou facteur d'échelle source) de l'origine absolue (point de fuite commun) P, et représente en outre les trois axes (PXa, PYa, PZa) de ce repère absolu. L'axe PZa est "**l'axe origine de référence**" dans le plan horizontal (PZa, PXa).

Comme on a vu précédemment, l'axe optique source PZ se projette en PTa sur le plan horizontal (PXa, PZa). Cette projection est faite parallèlement à l'axe vertical PYa. Dans cette opération, la projection du centre géométrique O est Oa. Le plan (PZ, PTa) est un "**plan vertical**".

Cette opération de projection définit deux angles qui lient le repère individuel source (PX, PY, PZ) au repère absolu (PXa, PYa, PZa) et qui sont :

l'angle de site φ (en anglais TILTING ANGLE) qui est l'angle dont il faut tourner l'axe optique source PZ, verticalement, pour l'amener dans le plan horizontal (PXa, PZa) en PTa,

l'angle d'azimut θ (en anglais PANNING ANGLE) qui est l'angle dont il faut tourner la projection PTa horizontalement pour l'amener sur l'axe origine de référence PZa.

Sur la figure 5A qui représente le plan vertical (PYa, PTa), I est la trace de l'image source, PZ est l'axe optique, O est le centre géométrique de l'image source, et d est le facteur d'échelle source. Ainsi :

l'angle de site φ est repéré par l'angle (PZ, PTa).

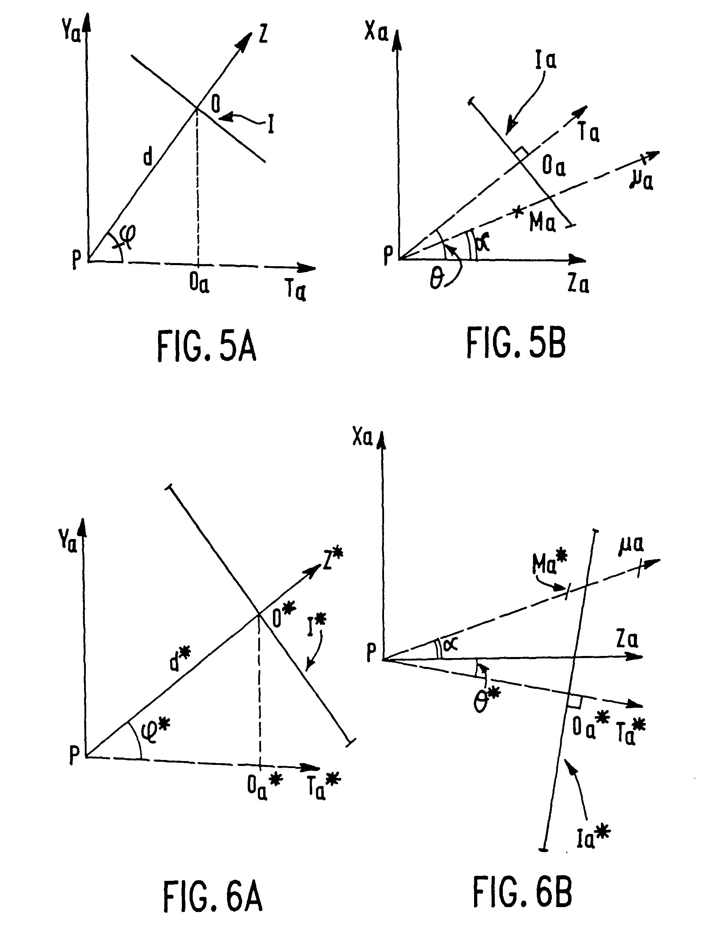

Dans la figure 5B qui représente le plan horizontal (PZa, PXa),

l'angle d'azimut θ est repéré par l'angle (PTa, PZa).

Si dans la FIG.1A, on remplace le plan source I par le plan cible I*, on peut définir de la même façon les angles de site φ* et d'azimut θ* qui relient le repère individuel cible au repère absolu.

Ainsi, en référence à la FIG.1B, on peut définir les paramètres angulaires qui relient le repère individuel de l'image cible I* au repère absolu. La FIG.1B représente le plan image cible I* en perspective, dans l'espace à 3 dimensions, muni du repère (OX'*, OY'*) dans son plan, son centre géométrique O* étant situé à la distance d* (**facteur d'échelle cible)** de l'origine absolue **(point de fuite commun)** P, et représente en outre les trois axes (PXa, PYa, PZa) de ce repère absolu.

L'axe optique cible PZ* se projette en PTa* sur le plan horizontal (PXa, PZa). Cette projection est faite parallèlement à l'axe vertical PYa. Dans cette opération, la projection du centre géométrique O* est Oa*. Le plan (PZ, PTa) est un **"plan vertical".** Cette opération de projection définit deux angles qui lient le repère individuel source (PX*, PY*, PZ*) au repère absolu (PXa, PYa, PZa), angles qui sont :

l'angle de site φ* (en anglais TILTING ANGLE) qui est l'angle dont il faut tourner l'axe optique cible PZ*, verticalement, pour l'amener dans le plan horizontal (PXa, PZa), sur PTa*,

l'angle d'azimut θ* (en anglais PANNING ANGLE) qui est l'angle dont il faut tourner la projection PTa* horizontalement pour l'amener sur l'axe origine de référence PZa.

Sur la figure 6A qui représente le plan vertical (PYa, PTa), I* est la trace de l'image cible, PZ* est l'axe optique, O* est le centre géométrique de l'image cible, et d* est le facteur d'échelle cible. Ainsi :

l'angle de site φ* est repéré par l'angle (PZ*, PTa*).

Sur la figure 6B qui représente le plan horizontal (PZa, PXa), Ia* est la projection orthogonale de l'image cible I*, Oa* la projection de O*, PTa* est la projection de l'axe optique PZ*. Ainsi :

l'angle d'azimut θ* est repéré par l'angle (PTa*, PZa).

A2/ **Exposé des buts de l'invention**

Le but de l'invention est de fournir un procédé pour construire une image cible I* à partir d'une image source I, en utilisant une transformation géométrique qui prend en compte les changements d'angles pour passer :

de l'angle d'azimut source θ à l'angle d'azimut cible θ*,
de l'angle de site source φ à l'angle de site cible φ*, et qui prend en compte le changement d'échelle pour passer du facteur d'échelle d, au facteur d'échelle d*.

La construction de l'image cible se fait par l'attribution d'un niveau de luminance Q à chaque pixel M* de l'image cible caractérisée par ses paramètres φ*, θ*, d*. Ce niveau de luminance doit être recherché au point M de l'image source qui est l'image du même point objet μ de l'espace à 3 dimensions dans une scène à filmer. Compte tenu du fait que l'image cible I* est choisie telle qu'elle ait le même point de fuite P que l'image source, et compte tenu des propriétés du point de fuite commun, il en résulte que les points images source M et cible M* sont alignés sur le même rayon lumineux rectiligne Pμ.

Ainsi, en partant de l'hypothèse que les coordonnées (X*, Y*) d'un point M* de l'image cible, I* dont on cherche le niveau de luminance Q, sont connues dans son repère individuel (PX*, PY*, PZ*), le procédé selon la présente invention **comprend la détermination des coordonnées** (X, Y) du point M correspondant de l'image source I dans son repère individuel (PX, PY, PZ). Puis, connaissant la position de ce point M dans l'image source I, **le procédé selon la présente invention comprend alors la détermination** de la fonction de luminance Q(X,Y) liée à ce point M de l'image source.

Ensuite, connaissant la fonction de luminance Q(X,Y) attachée au point M de l'image source, **le procédé selon la présente invention comprend la détermination** d'une fonction de luminance Q*(X*,Y*) qui doit être affectée au point M* de l'image cible à construire. Ayant, à ce moment là, les données consistant en une fonction de luminance pour chaque point de l'image cible, le procédé selon l'invention permet alors de construire l'image cible. Dans tout le procédé de traitement d'images, l'image source est définie par une première série de paramètres vis-à-vis d'un repère absolu dans l'espace à trois dimensions, et l'image cible est définie par une seconde série de paramètres vis-à-vis dudit repère absolu. Ces paramètres sont les angles d'azimut θ, θ* et de site φ, φ* qui lient chaque repère individuel au repère absolu, ainsi que les facteurs d'échelle, d et d* relatifs à chaque plan image source ou cible.

La reconstruction de l'image cible est fondée sur le fait que les points correspondants M dans l'image source et M* dans l'image cible sont des points images d'un même point objet μ de l'espace à trois dimensions. Dans un calcul exact, ces points sont situés sur un même rayon lumineux rectiligne Pμ qui s'appuie sur le point de fuite P commun aux deux images I et I* et passe par le point objet μ.

**B/ Description du procédé selon l'invention**

B1/ **Définition de fonctions géométriques appelées fonctions de transformation de perspective**

Pour réaliser la correspondance entre un pixel dans l'image cible et un point de l'image source, image du même point μ de l'espace situé sur un rayon lumineux Pμ s'appuyant sur le point de fuite commun P, il est nécessaire de déterminer des fonctions de transformation de perspective qui permettront de relier les coordonnées de chaque point d'un plan source ou cible à ce rayon lumineux Pμ passant par ce point objet μ de l'espace et le point de fuite P.

Ces fonctions de transformation de perspective sont chargées d'établir la relation entre :

la fonction de luminance Q*(X*, Y*) 1a)

relative au pixel M* de l'image cible I*,

et la fonction de luminance Q(X,Y)  \hfill 1b)

relative au point correspondant M de l'image source I. Cette correspondance est établie lorsque l'égalité suivante est réalisée :

$$Q^*(X^*,Y^*) = Q(X,Y) \hfill 2)$$

Pour résoudre ce problème, on définit une première fonction F telle que :

$$(X,Y) = F(\alpha,\beta) \hfill 3a)$$

et une seconde fonction G telle que :

$$(X^*,Y^*) = G(\alpha,\beta) \hfill 3b)$$

Les paramètres $\alpha$ et $\beta$ sont des paramètres angulaires qui seront définis plus loin. Une fois définis ces para-mètres angulaires $\alpha$ et $\beta$, le membre 1a) de la relation 2) peut être écrit en fonction de $\alpha$ et $\beta$, au moyen de la première fonction F comme ci-dessous :

$$Q(X,Y) = Q[F(\alpha,\beta)] \hfill 4a)$$

De la relation 3b) on déduit que :

$$(\alpha,\beta) = G^{-1}(X^*, Y^*) \hfill 5)$$

Cette relation 5) appliquée à la relation 4a) permet de déduire que :

$$Q(X,Y) = Q[F(G^{-1}(X^*,Y^*)] \hfill 4b)$$

L'expression 2) est ensuite écrite en remplaçant son membre 1b) par l'expression 4b). D'où il vient :

$$Q^*(X^*,Y^*) = Q[F(G^{-1}(X^*,Y^*))] \hfill 5a)$$

Le deuxième membre de l'équation 5a) est une composition de trois fonctions que l'on peut écrire en utilisant le signe mathématique de composition de fonction "o" (prononcer "rond"). L'équation 5a) s'écrit donc :

$$Q^*(X^*,Y^*) = Q \text{ o } F \text{ o } G^{-1}(X^*,Y^*) \hfill 5b)$$

ou plus commodément (prononcer Q étoile égale Q rond F rond inverse de G) :

$$Q^* = Q \text{ o } F \text{ o } G^{-1} \hfill 6)$$

Dans l'équation 6, les fonctions $Q^*$ et Q sont des fonctions de luminance et les fonctions F et $G^{-1}$ sont des fonctions de transformation de perspective.

On a déjà cité, dans la partie introductive de la description de l'invention, que l'état de la technique connu enseignait des fonctions de transformations de perspectives, qui pouvaient mener certes à une construction "exacte" de l'image cible par traitement de l'image source, mais que cette exactitude dans la construction, était obtenue aux prix de l'utilisation de moyens très difficiles à mettre en oeuvre, dans le cadre de contraintes peu compatibles avec le problème à résoudre, et en outre onéreux. La présente invention vise la détermination de fonctions F et G$^{-1}$ de transformation en perspective qui présentent les propriétés suivantes :

a) ces fonctions, sans permettre une "construction rigoureusement exacte" de l'image cible à partir de l'image source, fournissent néanmoins une construction de l'image cible, prenant en compte des approximations telles qu'un observateur averti puisse considérer cette construction comme "raisonnablement et suffisamment fidèle", et que, d'une manière générale, un observateur non spécialiste et non prévenu, ne puisse différentier une image cible construite selon l'invention d'une image cible construite de manière "rigoureusement exacte".

b) ces fonctions peuvent être mise en oeuvre par des moyens simples et peu coûteux.

c) ces fonctions mises en oeuvre permettent d'obtenir la construction de l'image cible en temps réel, ce qui résout le problème technique exposé dans la partie introductive de cette description.

Selon l'invention, on définit donc d'abord ces deux fonctions F et G$^{-1}$.

B2/ **Détermination de la fonction G$^{-1}$** de transformation géométrique de perspective selon l'invention.

En référence à la FIG.1B, ainsi que montré par ailleurs sur la FIG.6B, un rayon lumineux Pµ, passant par le pixel M* de l'image cible I* se projette orthogonalement en Pµa sur le plan horizontal (PZa, PXa) du repère absolu.

Dans cette projection, le plan (Pµ, Pµa) est un plan vertical, et le point Ma* est la projection, sur Pµa, du pixel M* de Pµ, cette projection étant parallèle à l'axe vertical PYa. Donc, dès que l'on connaît les coordonnées (X*, Y*) d'un pixel donné M* de l'image cible, on cherche à déterminer les coordonnées sphériques définissant le rayon lumineux Pµ passant par ce point M*.

Ces coordonnées sphériques attachées au rayon Pµ sont:

l'angle $\alpha$ = (PZa, Pµa) dans le plan horizontal,

l'angle $\beta$ = (Pµ, Pµa) dans un plan vertical.

Ces angles définissent entièrement la position du rayon lumineux Pµ dans le repère absolu, et donc dans l'espace à 3 dimensions.

On va ci-après choisir des relations pour lier ces coordonnées sphériques $\alpha$, $\beta$ (ou angles $\alpha$, $\beta$) considérées dans le repère absolu, aux coordonnées X*, Y* considérées dans le repère individuel de l'image cible I*.

En référence à la FIG.2B qui représente en perspective le plan cible I* dans son repère individuel (PX*, PY*, PZ*), un point M* est complètement défini par la connaissance de :

$$\text{l'angle } A^* = (PM'^*, PO^*)$$

$$\text{l'angle } B^* = (PM, PM')$$

où M'* est la projection de M* sur l'axe X'* dans le plan de l'image cible I*,

$$\text{et le facteur d'échelle } d^* = P0^*$$

qui est la distance entre le point de fuite commun P, servant d'origine absolue, et le point O* centre géométrique de l'image I*.

Or on a vu précédemment, en référence aux FIG.2B et 4B que :

$$M^*M'^* = Y^*$$

$$\text{et } 0^*M'^* = X^*$$

En référence à la FIG.2B, on calcule :

$$A^* = \text{arctg} (X^*/d^*) \qquad\qquad \text{20a)}$$

$$B* = \text{arctg } [(\cos A*) \, Y*/d*] \qquad\qquad 20b)$$

En référence à cette FIG.2B, on cherche maintenant à définir le point M*, non plus seulement dans son repère individuel, mais dans le repère absolu.

En relation avec la FIG.1B, on passe du repère individuel au repère absolu en appliquant successivement une rotation -φ* (TILTING) et une rotation -θ*(PANNING) à l'axe optique PZ* de l'image cible pour l'amener sur l'axe PZa du repère absolu. On peut donc écrire les formules suivantes de changement de repère données par le Tableau I, d'où après calculs, on obtient :

$$\alpha = \text{arctg}(\frac{\cos B * .\sin A *}{\cos B * .\cos A * \cos * + \sin B * .\sin *}) + \theta * \qquad\qquad 21a)$$

$$\beta = \arcsin(-\cos B * .\cos A * .\sin * + \sin B * .\cos *] \qquad\qquad 21b)$$

On a maintenant grâce aux relations 21a et 21b, et en tenant compte des relations 20a et 20b, une possibilité de déterminer la fonction géométrique $G^{-1}$ déjà définie :

$$(\alpha, \beta) = G^{-1} (X*, Y*)$$

Mais il faut prendre en considération que, selon l'invention on s'est fixé pour but de calculer l'image cible I* en temps réel. Donc les calculs relatifs aux fonctions $G^{-1}$ et F doivent être réalisables en temps réel. Or, il apparaît lorsque l'on considère les relations 20 et 21, qui sont des relations trigonométriques exactes, que la fonction $G^{-1}$ calculable au moyen de ces relations est très compliquée et difficile à calculer en temps réel.

On propose donc ci-après une approximation de cette fonction ou plus exactement une transformation de cette fonction qui va permettre non seulement d'obtenir la construction de l'image cible en temps réel, mais encore d'obtenir cette image cible avec des modifications de perspective très agréables et confortables à visualiser pour un observateur. Ce point sera développé plus loin.

La transformation apportée à la fonction $G^{-1}$ repose sur les considérations suivantes :

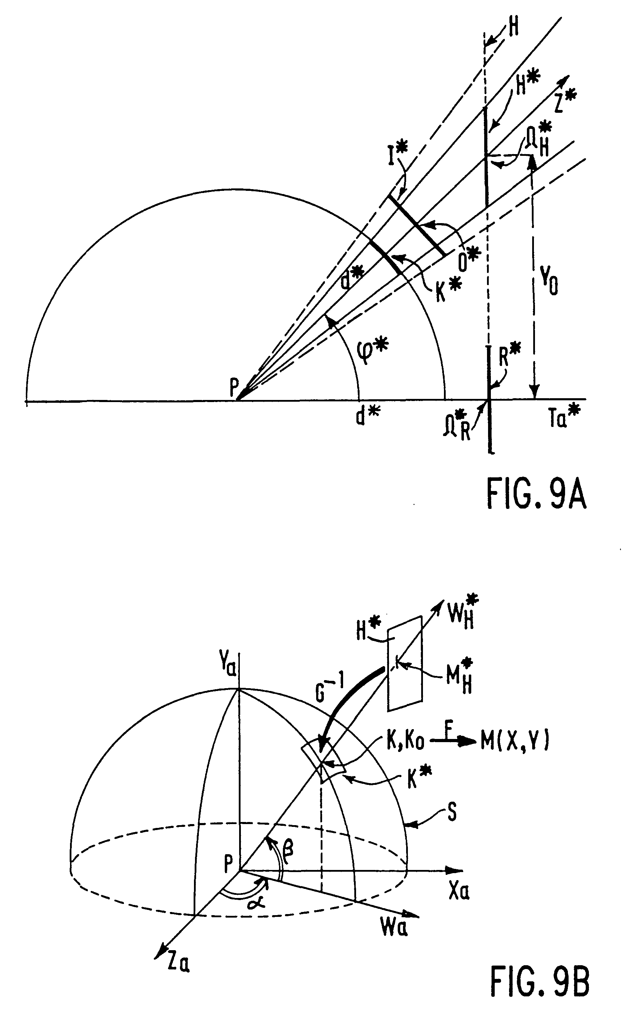

En référence à la FIG.9A qui montre, en coupe, l'image cible I* dans le plan vertical (PZ*, PTa*), ce plan contenant l'axe optique PZ* de l'image cible passant par son centre géométrique O*, et la projection PTa* de cet axe optique sur le plan horizontal, on effectue une projection de l'image cible I* sur un plan vertical noté H et on note H* l'image obtenue par cette projection. En référence à la FIG.9A, on choisit le plan de projection H comme le plan vertical qui est :

    perpendiculaire au plan horizontal (PZa, PXa),
    perpendiculaire au plan (PZ*, PTa*)
    distant de la valeur $d* = P\Omega_R*$ de l'origine absolue P.

Sur cette FIG.9A, il apparaît que le plan de l'image cible I* est lui-même:

    perpendiculaire au plan (PZ*, PTa*)
    distant de la valeur $d* = PO*$ de l'origine absolue P,
    <u>mais non</u> perpendiculaire au plan horizontal (PZa, PXa).

L'image H* obtenue par cette projection a les mêmes dimensions, c'est-à-dire le même cadrage que l'image cible I* et son centre géométrique, noté $\Omega_H*$ est un pixel de cette image H* situé à l'intersection de l'axe optique PZ* et du plan de l'image H*. Dans ces conditions, le centre géométrique, situé sur PZ*, de l'image H* verticale, référence $\Omega_H*$, a pour distance au plan horizontal (PZa, PXa) :

$$\Omega_H* \; \Omega_R* = Yo$$

En référence à la FIG.9A, il apparaît que :

$$Yo = d^*.tg\_^* \qquad\qquad 19)$$

Pour effectuer cette projection de I* vers H*, on peut décomposer la transformation géométrique effectuée, en deux transformations géométriques élémentaires qui sont :

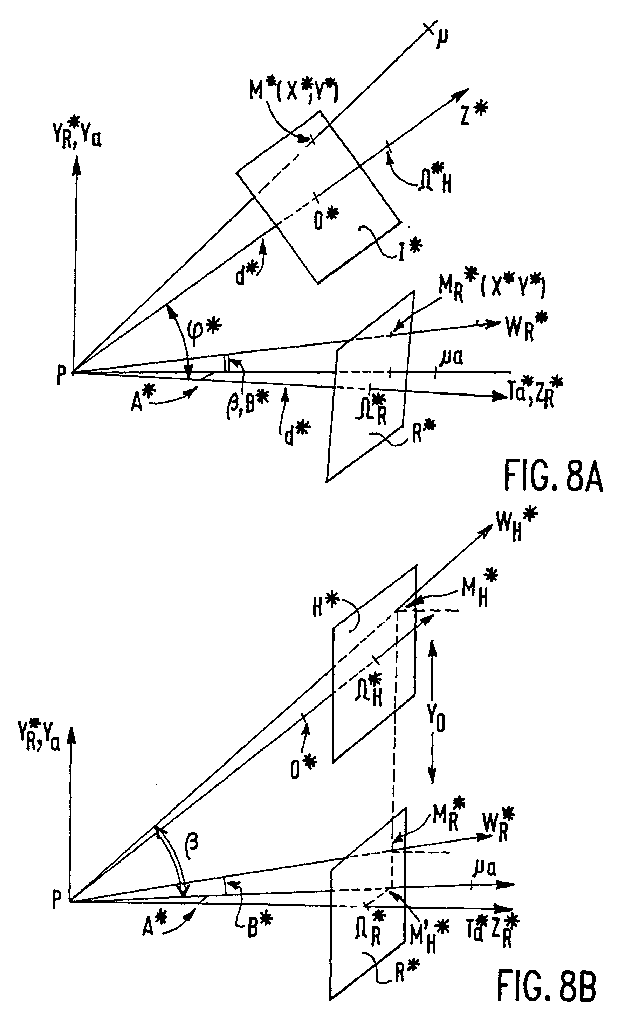

a) UNE ROTATION qui en référence avec les FIG.8A et 9A fait tourner l'image cible I* d'un angle $\varphi^*$ dans l'espace à 3 dimensions pour amener l'axe optique cible PZ* en coïncidence avec sa projection PTa* dans le plan horizontal.
Cette rotation est effectuée parallèlement au plan vertical (PZ*, PTa*) de la FIG.9A. Par cette rotation, l'image I* devient une image R* verticale, située dans le même plan H que l'image projetée H* que l'on cherche à obtenir ; son axe optique est devenu confondu avec PTa* ; son centre optique est $\Omega_R^*$ intersection de PTa* avec R*, son facteur d'échelle est toujours d* mesuré par :

$$P\Omega_R^* = d^*$$

La FIG.8A montre en perspective les positions relatives de l'image cible I*, et de l'image R* obtenue par la rotation $\varphi^*$ appliquée à son axe optique PZ* pour l'amener sur PTa*, cette rotation étant opérée dans le plan vertical PYa, PTa*).
Sur la FIG.8A, on a noté que l'axe PTa* devenait par cette rotation en coïncidence avec l'axe optique $PZ_R^*$ de l'image R* issue de la rotation. Sur la FIG.8A, on a représenté que, dans la rotation $\varphi^*$, le rayon lumineux Pu qui fournit le pixel image M* dans l'image cible I*, devient le rayon $PW_R^*$ qui intersecte l'image R* au pixel $M_R^*$ correspondant de M*.

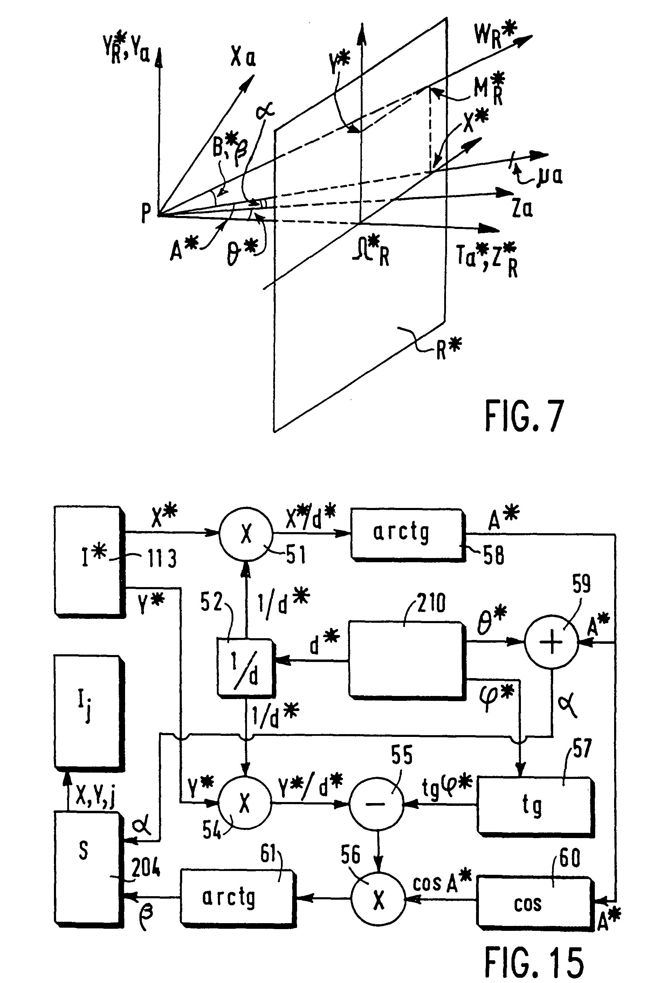

La figure 7 montre en perspective l'image R* dans le repère absolu, et en outre muni d'un repère individuel identique au repère individuel de l'image I*. Cela signifie que l'image R* est munie d'un système d'axes orthogonaux individuel, dans lequel le pixel $M_R^* \rightarrow (X^*, Y^*, d^*)$.
Il faut noter que, dans cette transformation par rotation $\varphi^*$, les angles entre chacun des plans verticaux qui entrent en jeu dans la définition de l'image cible ne sont pas modifiés. Il en est ainsi de :

$$\text{l'angle } \alpha = (PZa, P\mu a)$$

$$\text{l'angle } \theta = (PZa, PTa)$$

En référence à la FIG.2B et la FIG.7, la définition des angles A* et B* reste la même :

$$\text{l'angle } A = (PTa, P\mu a)$$

$$\text{l'angle } B = (P\mu a, PW_R^*)$$

Il résulte de la comparaison de la FIG.2B qui représente l'image I* dans son repère individuel, et de la FIG.7, qui représente l'image de rotation R* à la fois dans le repère absolu et dans son repère individuel, que :

$$\alpha = A^* + \theta^* \qquad \text{avec } A^* = \text{arctg } (X^*/d^*) \qquad\qquad 18)$$

$$\beta = B^*$$

Le même résultat peut être trouvé d'une manière aveugle en écrivant que $\varphi^* = 0$ dans les relations 21a et 21b. Donc :

$$\alpha = \theta^* + A^* \qquad 22a), \text{ avec } A^* = \text{arctg } (X^*/d^*) \qquad 20a)$$

et

$$\beta = B^* \qquad 22b), \text{ avec } B^* = arctg[(\cos A^*)\, Y^*/d^*] \qquad 20b)$$

b) Une TRANSLATION qui, en référence aux FIG.8B et 9A, déplace verticalement l'image R* d'une valeur Yo dans le même plan vertical H défini lors de la rotation $\varphi^*$ précédente. Dans cette translation Yo, l'image de rotation R* devient l'image de translation H*.

La FIG.8B montre en perspective les positions de l'image de rotation R* et de l'image de translation H* obtenue par la translation Yo verticale.

Sur cette FIG.8B, on note que l'axe optique PZ* de l'image cible I* intersecte le plan vertical H en un pixel $\Omega_H^*$ centre géométrique de l'image de translation H*. Comme montré sur la FIG.8B, les angles compris entre des plans verticaux qui entrent en jeu dans la définition de l'image de rotation R* ne subissent pas de modifications lors de la formation de l'image de translation H*.

Donc, le cadrage de l'image de translation H* est le même que celui de l'image de rotation R*, et est le même que celui de l'image cible I*.

En référence à la FIG.8B, il apparaît qu'un pixel $M_H^*$ de H* est obtenu par la translation verticale de valeur Yo du pixel $M_R^*$ de R*, qui est le correspondant dans la rotation $\varphi^*$ du pixel M* de I. Donc $M_H^*$ de H* est le correspondant de M* de I* dans la combinaison "rotation $\varphi^*$ + translation verticale Yo" formant la projection de I* vers H* recherchée. La FIG.8B montre que le pixel $M_H^*$ de l'image H* est situé à l'intersection du rayon lumineux $PW_H^*$ et de l'image H*. Ce rayon lumineux $PW_H^*$ se trouve dans le même plan vertical que le rayon lumineux $PW_R^*$ relatif au pixel $M_R^*$ de R*. Le rayon lumineux $PW_H^*$ de H*, aussi bien que le rayon lumineux $PW_R^*$ de R* ont la même projection P$\mu$a que le rayon P$\mu$ de I*, sur le plan horizontal (PXa, PZa).

Dans ce qui va suivre, pour le calcul d'une fonction $G^{-1}$ simplifiée, on ne va plus chercher les coordonnées sphériques du rayon lumineux P$\mu$ passant par le pixel H* de l'image cible I*, mais bien les coordonnées sphériques du rayon lumineux $PW_H^*$ passant par le pixel $M_H^*$ de l'image H*. Ce pixel $M_H^*$ a les mêmes coordonnées (X*, Y*) dans un repère de l'image H* ayant pour origine le centre géométrique $\Omega_H^*$ de l'image H*. L'image H* est la projection de l'image I* sur le plan vertical H, distant de d* du point P, telle que le centre géométrique $\Omega_H^*$ de cette image H* est sur l'axe optique PZ* de l'image cible I*.

Dans le paragraphe précédent relatif à la rotation $\varphi^*$ qui fait passer de l'image I* à l'image R*, on a donné les relations qui permettent de passer de la définition d'un pixel $M_R^*$ dans le repère individuel de R* à sa définition dans le repère absolu. On va fournir maintenant des relations qui permettent de passer de la définition du pixel $M_H^*$ **dans le repère individuel de l'image de rotation R*** à sa définition dans le repère absolu. Pour cela on va commencer par définir le pixel $M_H^*$ de l'image H* dans le repère individuel de l'image de rotation R*.

Comme il résulte de la FIG.8B et de la FIG.7, si l'on définit l'image de translation H* dans le repère individuel de l'image de rotation R* :

l'angle A* est inchangé,
l'angle $\theta^*$ est inchangé,

l'angle $\varphi^*$ est celui de l'image cible I*, d'où

$$\alpha = A^* + \theta^* \qquad\qquad 23a)$$

l'abscisse X* du pixel $M_H^*$ est la même que celle du pixel $M_R^*$, l'ordonnée du pixel $M_H^*$ est Y* - Yo par rapport à celle du pixel $M_R^*$,
l'angle $\beta$ devient différent de B* puisque $\beta = (PW_H^*, P\mu a)$ alors que $B^* = (PW_R^*, P\mu a)$, avec :

$$B^* = arctg\,[(\cos A^*)\, Y^*/d^*] \qquad\qquad 20b)$$

Comme la modification entre B* et $\beta$ est due au fait que l'ordonnée de $M_R^*$ qui était Y* devient (Y* + Yo) pour $M_H^*$. Il en résulte que :

$$\beta = arctg[(Y* - Yo)(\cos A*)/d*] \qquad\qquad 23b)$$

avec

$$Yo = d^*.tg\ \varphi^* \tag{19}$$

et

$$A = arctg\ (X^*/d^*) \tag{20a}$$

On a maintenant déterminé des équations qui permettent de relier un pixel $M_H^*$ de l'image H* d'adresse, ou coordonnées X*, Y* dans H*, aux coordonnées sphériques $(\alpha, \beta)$ du rayon $PW_H^*$ en tenant compte de variables intermédiaires A* et B*, et d'un paramètre Yo.

Il faut bien noter que l'on dispose maintenant de nouvelles relations trigonométriques 23a, 23b) pour déterminer les angles $\alpha$, $\beta$ définissant le nouveau rayon lumineux $PW_H^*$ qui ne passe plus par le pixel M*(X*,Y*) de l'image cible I*, et qui n'est donc plus le rayon lumineux réel Pμ passant exactement par ce pixel M*(X*,Y*). C'est le choix de cette nouvelle définition du rayon lumineux considéré qui va entraîner, comme on l'a dit précédemment, que l'image reconstruite soit, non pas "exacte" comme dans l'état de la technique mais "rectifiée". Dans ce choix, on a fait en sorte que l'image reconstruite selon l'invention, avec le changement de perspective voulu, ait des caractéristiques très proches d'une image "exacte" dont les aberrations optiques sont en outre corrigées au mieux. Dans le nouveau choix de perspective selon l'invention on suppose donc que le rayon lumineux $PW_H^*$, qui se projette en Pμa sur le plan horizontal n'est pas très éloigné du rayon lumineux Pμ réel, et conduit à une image parfaitement agréable à regarder. On a vu que la projection Pμa est la même pour le rayon Pμ réel et pour le rayon $PW_H^*$ grâce à l'utilisation de l'image H*, projection de I*, choisie.

Il en résulte les relations simplifiées donnant des coordonnées sphériques :

$$\alpha = A^* + \theta^* \tag{23a}$$

$$\beta = arctg\ [(Y^* - Yo)(cos\ A^*)/d^*] \tag{23b}$$

avec

$$Yo = d^*.tg\varphi^* \tag{19}$$

et

$$A^* = arctg\ (X^*/d^*) \tag{20a}$$

qui définissent entièrement la position de ce nouveau rayon lumineux $PW_H^*$ dans le repère absolu et qui permettent à l'homme du métier de déterminer la fonction $G^{-1}$ de la relation 5) recherchée :

$$(\alpha, \beta) = G^{-1}\ (X^*, Y^*) \tag{5}$$

Cette fonction $G^{-1}$ permet de calculer les coordonnées sphériques $(\alpha, \beta)$ du rayon lumineux etiqueté "approché" $PW_H^*$ que l'on a choisi de lier à un pixel donné M* (X*, Y*) de l'image cible I*, dès que l'on connaît les angles $\varphi^*$, $\theta^*$ et le facteur d'échelle d*.

Donc, cette fonction $G^{-1}$ comprend les paramètres $\theta^*$, $\varphi^*$ et d* qui peuvent varier continuellement au gré d'un utilisateur. Mais selon l'invention, cette fonction a été choisie suffisamment simple pour être calculable en temps réel tout en fournissant une image reconstruite correcte comme on verra ultérieurement.

En référence à la FIG.9A qui montre en coupe dans le plan (PZ*, PTa*) les différentes images I*, R* et H*, il apparaît clairement à l'homme du métier que l'image projetée H* sur le plan vertical H montre un "champ optique" diminué lorsque l'oeil de l'observateur est situé au point de fuite P. On entend par là que les rayons externes qui s'appuient sur le haut et le bas de l'image H* n'ont pas un angle d'ouverture aussi grand que ceux qui s'appuient sur le haut et le bas de l'image cible I*. Par l'effet de projection choisie, l'image H* présente vis-à-vis de I* un léger tassement des parties hautes et basses. Il en résulte l'effet choisi de "rectification" déjà cité. Cette effet consiste en un redressement des lignes verticales (qui dans l'image I* seraient fuyantes vers le haut et en outre courbes) coopérant avec une linéarisation des lignes horizontales (qui dans l'image I* seraient légèrement courbes). Cet effet sera commenté plus loin.

## B3/ Calcul de la fonction géométrique F de transformation de perspective selon l'invention

A partir de la connaissance des coordonnées sphériques ($\alpha$, $\beta$) du rayon lumineux $PW_H$*, appelé ci-après rayon approché ou approximatif, choisi au moyen de la projection H*, il faut maintenant déterminer les coordonnées (X, Y) du point M de l'image source I, dans son repère individuel, ce point M étant situé sur le MEME rayon lumineux $PW_H$* approximatif choisi en remplacement du rayon lumineux exact $P\mu$.

En référence à la FIG.2A qui représente en perspective le plan source I dans son repère individuel (PX, PY, PZ), un point M est complètement défini par la connaissance de :

$$l'angle\ A = (PM', PO)$$

$$l'angle\ B = (PM, PM')$$

où M' est la projection de M sur l'axe X' dans le plan de l'image source I,

$$et\ le\ facteur\ d'échelle\ d = P0$$

qui est la distance entre le point de fuite commun P, servant d'origine absolue, et le point O centre géométrique de l'image I.

Or on a vu précédemment, en référence à la FIG.3B que :

$$MM' = Y$$

et

$$MM'' = X$$

En référence à la FIG.2A, on calcule :

$$X = d.tgA. \tag{10a}$$

$$Y = d.tgB/cos\ A \tag{10b}$$

En référence à cette FIG.2A, on cherche maintenant à définir le point M, non plus seulement dans son repère individuel, mais dans le repère absolu.

En relation à la FIG.1A, on passe du repère absolu au repère individuel en appliquant successivement une rotation $\ominus$ (PANNING) et une rotation $\varphi$ (TILTING) à l'axe optique PZ du plan image source pour l'amener sur l'axe PZa du repère absolu.

On peut donc écrire les formules suivantes de changement de repère, donnée par le Tableau II, d'où après calculs, on obtient :

$$A = arctg(\frac{cos\ \beta.sin(\alpha-\theta)}{cos\beta.cos(\alpha-\theta).cos\ -sin\beta sin}) \tag{11a}$$

$$B = \arcsin(\cos \beta . \cos(\alpha - \theta) \sin + \sin \beta \cos) \qquad \text{11b)}$$

La combinaison des relations 3a) et des relations 10a), 10b) conduit à la relation F recherchée entre (X,Y) et (α, β). Cette relation est exacte et donc compliquée, mais il faut noter qu'elle ne dépend que des paramètres θ et φ de l'image source qui sont fixes et connus A PRIORI, et des couples (α, β). En se fixant A PRIORI un certain nombre de couples (α, β), la fonction F peut être tabulée, et ainsi la difficulté des calculs due à la complexité de la fonction F, peut être contournée. Les distorsions des objectifs pourront être prises en compte également dans la fonction tabulée. Plus nombreux seront les couples (α, β) prévus A PRIORI, plus la précision sur la détermination des points M(X,Y) sera grande.

B4/ **Procédé de traitement d'image pour la construction de l'image cible au moyen des fonctions géométriques F et G$^{-1}$**

L'utilisateur définit les paramètres de l'image cible I* qu'il veut construire. Ces paramètres sont l'angle d'azimut $\ominus$*, l'angle de site φ* et le facteur d'échelle d*.

Selon l'invention, le procédé de traitement d'image pour la construction de l'image cible I* comporte d'abord la définition des coordonnées (X*, Y*) de chaque pixel M* de cette image cible I*. Puis pour chacun des pixels M* (X*, Y*), ce procédé applique la fonction G$^{-1}$ définie par :

$$(\alpha, \beta) = G^{-1} (X^*, Y^*) \qquad \text{5)}$$

dans laquelle :

$$\alpha = \theta^* + A^* \qquad \text{23a)}$$

et

$$\beta = \mathrm{arctg} \,[(Y^* - Yo)(\cos A^*)/d^*] \qquad \text{23b)}$$

avec

$$A^* = \mathrm{arctg} \,(X^*/d^*) \qquad \text{20a)}$$

et avec

$$Yo = d^*.\mathrm{tg}\varphi^* \qquad \text{19)}$$

L'application de la fonction de transformation géométrique de perspective G$^{-1}$(5) permet donc à partir des coordonnées X*, Y* d'un pixel M* donné, dans le repère individuel de l'image cible I*, de calculer de manière simplifiée les coordonnées sphériques (α, β) du rayon lumineux approché PW$_H$* lié à ce pixel M* par l'opération de projection H*, et passant par le point de fuite P commun à toutes les images, lequel est en outre origine du repère absolu dans lequel sont mesurés les angles α, β.

Une fois calculées les coordonnées sphériques (α, β) du rayon lumineux approximatif PW$_H$*, le procédé de traitement d'image comporte la recherche, dans une table, pour chaque couple des coordonnées sphériques (α, β) définies dans le repère absolu, des coordonnées (X, Y), d'un point M de l'image source situé à l'intersection du rayon lumineux approximatif PW$_H$* avec cette image source I, ces coordonnées (X,Y) étant mesurées dans le repère individuel de cette image source.

A cet effet, dans une étape initiale, on se fixe un certain nombre de couples de coordonnées sphériques (α, β) que l'on étiquette (α$_o$, β$_o$), et on calcule pour chaque couple (α$_o$, β$_o$) donné le couple de coordonnées (X,Y) en appliquant la fonction de transformation géométrique de perspective F

$$(X, Y) = F (\alpha_o, \beta_o) \hspace{4cm} 3a)$$

$$\text{avec } X = d.tg\ A \hspace{4cm} 10a)$$

$$Y = d.tg\ B/cos\ A \hspace{4cm} 10b)$$

relations dans lesquelles les paramètres intermédiaires A et B sont des fonctions trigonométriques 11a) et 11b) des coordonnées sphériques ($\alpha_o$, $\beta_o$), dans lesquelles interviennent les paramètres de l'image source I, qui sont l'angle d'azimut $\ominus$ et l'angle de site $\varphi$. Pour chaque couple ($\alpha_o$, $\beta_o$), les coordonnées X et Y du point M sont donc des pures fonctions du facteur d'échelle d de l'image source et des angles $\theta$ et $\varphi$, qui sont des valeurs connues A PRIORI dans ce procédé de traitement d'image. Par conséquent dans l'étape initiale, des couples ($\alpha_o$, $\beta_o$) sont donnés, puis les couples de coordonnées (X,Y) correspondants sont calculés et stockés dans une table aux adresses ($\alpha_o$, $\beta_o$).

La table est utilisée en mettant en correspondance chaque couple ($\alpha,\beta$), calculé au moyen de $G^{-1}$, avec une adresse ($\alpha_o$, $\beta_o$) de la table, à la résolution de la table près. A cette adresse se trouve un couple de coordonnées (X, Y), précalculé et stocké, qui est lu.

Ayant, à ce moment, les coordonnées du point M de l'image source correspondant au mieux au pixel M* de l'image cible I*, le procédé comporte la détermination, éventuellement par interpolation, de la valeur du niveau de luminance en ce point M et ensuite le report de ce niveau de luminance au pixel M* de l'image cible à construire.

Ces opérations sont répétées pour chaque pixel de l'image cible jusqu'à ce que la totalité de l'image cible soit construite.

Lorsque l'utilisateur choisit de nouveaux paramètres $\varphi^*$, $\theta^*$ et $d^*$ pour l'image cible, une nouvelle image cible est construite, l'image source restant à une position inchangée dans l'espace à 3 dimensions avec des paramètres $\theta$, $\varphi$ et d inchangés. Dans les variations de position et de facteur d'échelle de l'image cible, imposées par l'utilisateur, cette image cible conserve néanmoins son point de fuite commun avec l'image source.

### C/ Dispositif de traitement d'image pour mettre en oeuvre les fonctions géométriques F et $G^{-1}$

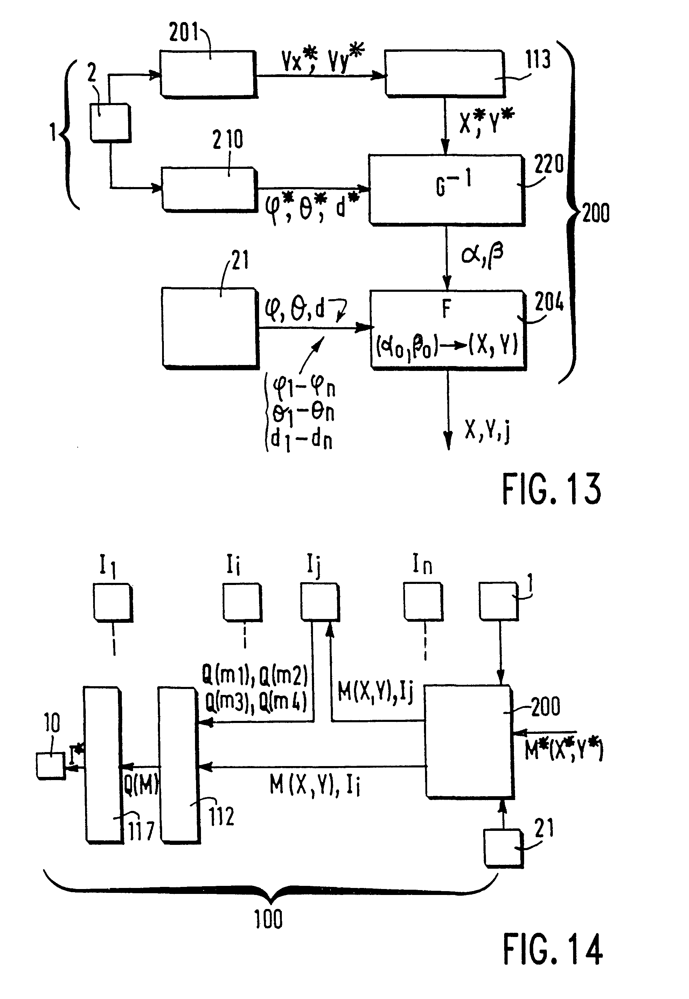

La FIG.13 représente, en blocs fonctionnels, un dispositif 200 de traitement d'image pour construire une image cible I* à partir d'une image source I en mettant en oeuvre les fonctions de transformations géométrique de perspective $G^{-1}$ et F définies précédemment. D'une manière générale ci-après ce dispositif sera appelé **"calculateur d'adresse"**, référencé 200, puisqu'il est chargé de calculer, à partir de l'adresse (X*,Y*) d'un pixel M* dans l'image cible I*, l'adresse (X,Y) du point M correspondant dans l'image source I.

Sur la FIG.13, le bloc 210 est un bloc mémoire qui stocke les paramètres $\varphi^*$, $\theta^*$ et $d^*$ choisis par l'utilisateur pour construire l'image cible I* en temps réel, (c'est-à-dire environ 20 images par secondes), avec changement ou non des paramètres de l'image cible. Le bloc 201 est un bloc qui définit le cadrage de l'image cible I*, c'est-à-dire les paramètres $2V_x^*$, et $2V_y^*$ qui définissent en nombre de pixels, les dimensions de l'image cible parallèlement aux lignes ($2V_x^*$) et aux colonnes ($2V_y^*$) de pixels. Ces paramètres sont définis à partir des paramètres choisis par l'utilisateur. Le bloc 113 est un générateur d'adresses qui fournit, dans le repère individuel de l'image cible, les différentes adresses (X*,Y*) de chacun des pixels M*, de cette image cible I*, donc une adresse pour chaque pixel.

Le bloc 220 reçoit les données des blocs 113 et 210. Dans le bloc 220 est mise en oeuvre la fonction $G^{-1}$. Les blocs 113, 201 et 210 sont par exemple des zones de mémoires. Les connexions entre les blocs 113, 201 et 210 sont des systèmes d'accès à ces mémoires.

Les FIG.9A et 9B illustrent la manière dont les fonctions $G^{-1}$ et F sont utilisées dans le calculateur d'adresse 200.

A chaque couple (X*, Y*) fourni par le bloc 113 correspond, en fonction des angles $\theta^*$ et $\varphi^*$ et du paramètre $d^*$, un rayon approximatif $PW_H^*$ caractérisé par les coordonnées sphériques $\alpha$ et $\beta$ données par les relations 22a) et 22b).

Lorsque l'on balaye l'image cible I* au fur et à mesure que le bloc 113 fournit les coordonnées des pixels des différentes lignes de cette image, les unes après les autres, le rayon lumineux $PW_H^*$ balaye l'image de projection H* du plan vertical H, et ce faisant, le rayon approximatif $PW_K^*$ balaye une zone K* d'une sphère S de centre P représentée en coupe sur la FIG.9A et en perspective sur la FIG.9B. Chaque rayon approximatif $PW_H^*$ intersecte la sphère S, dans la zone K* en un point K. Il y aura autant de points d'intersection K dans la zone K*, en surface de la sphère S, que de rayons lumineux $PW_H^*$, c'est-à-dire de pixels dans I*. A chacun de ces points K de la sphère S est associé un couple calculé $\alpha$, $\beta$. La dimension de la surface K* balayée sur la sphère S dépend du cadrage, c'est-à-dire des di-

mensions en pixels $2V_x^*$ et $2V_y^*$, de l'image cible I*.

En référence à la FIG.9B, la transformation géométrique $G^{-1}$ définie par les relations 5) et 23a), 23b) consiste donc en une "projection" de l'image H* sur la zone sphérique K*. Par cette projection, on détermine des points $K(\alpha,\beta)$ de K* correspondant aux points $M^*(X^*,Y^*)$ de I*. Cette détermination est faite en temps réel grâce aux moyens de calcul symbolisés par le bloc 220 du diagramme de la FIG.13.

La sphère S représentée sur les FIG.9A et 9B est une construction purement théorique destinée à faire comprendre à l'homme du métier comment tabuler la fonction compliquée F.

Pour tabuler la fonction F, on détermine A PRIORI une "résolution" en pixels par radian sur la sphère S au moins aussi bonne que toute "résolution" possible de l'image cible I*. On choisit ainsi A PRIORI une quantité de pixels $K_o$ d'adresse $(\alpha_o, \beta_o)$ répartis à la surface de la sphère, ici dans la zone K* considérée. L'adresse $(\alpha_o, \beta_o)$ de chaque pixel $K_o$ donné est constituée par les coordonnées sphériques $(\alpha_o, \beta_o)$ du rayon $PK_o$ de la sphère S. Pour chaque couple $(\alpha_o, \beta_o)$ lié à un pixel $K_o$ donné, on calcule, dans une étape préalable, au moyen de la fonction trigonométrique F décrite précédemment, les coordonnées (X,Y) de points M de l'image source I correspondants. En effet, par les relations 10a), 10b) et 11a), 11b) pour chaque couple $(\alpha_o, \beta_o)$, les coordonnées X, Y sont fixées et déterminables une fois pour toutes à partir du moment où les paramètres $\varphi$, $\ominus$ et d de l'image source I sont connus.

Ainsi, en référence à la FIG.13 selon l'invention, l'image source I est par hypothèse une image de cadrage fixe, dont les paramètres sont connus A PRIORI. Donc les couples de coordonnées (X,Y) calculés par F dans une étape initiale, à partir de couples de coordonnées sphériques $(\alpha_o, \beta_o)$ fixés A PRIORI peuvent être stockés dans une zone mémoire 204, encore appelée TABLE (LUT), aux adresses constituées par ces couples $(\alpha_o, \beta_o)$ choisis. Dit autrement, on entre, dans une étape initiale, dans une table (LUT), pour chaque adresse $(\alpha_o, \beta_o)$ constituées par les coordonnées sphériques de pixels $K_o$ choisis, les coordonnées précalculées (X,Y) de points M de l'image source I. Maintenant, dans le calculateur d'adresse représenté sur la FIG.13, les moyens 220 calculent, par la fonction $G^{-1}$, en temps réel, un couple $(\alpha, \beta)$ pour chaque couple (X,Y). Ces moyens de calcul 220 comprennent, par exemple l'ensemble des fonctions représenté de manière schématique sur la FIG.15 pour fournir $\alpha$ en mettant en oeuvre la relation trigonométrique 23a) et pour fournir de manière concomitante $\beta$ en mettant en oeuvre la relation trigonométrique 23b). Ainsi, par les moyens de l'invention, la fonction $G^{-1}$, qui comprend des variables changeant chaque fois que l'utilisateur choisit de nouveaux réglages de l'image cible, est devenue suffisamment simple pour être calculée en temps réel.

En référence à la FIG.13, le bloc suivant 204 reçoit le résultat des calculs opérés dans le bloc 220, consistant en des couples calculés $(\alpha, \beta)$. Ce bloc 204 est la table (LUT) dans laquelle sont stockés les résultats des calculs par la fonction F appliqués aux couples $(\alpha_o, \beta_o)$ choisis A PRIORI, c'est-à-dire les points M(X,Y) correspondants aux points $K_o$ $(\alpha_o, \beta_o)$. Des moyens d'adressage vont chercher dans la table 204 l'adresse $(\alpha_o, \beta_o)$ qui correspond le mieux, à la résolution de la table près, à l'adresse calculée $(\alpha, \beta)$ fournie par le bloc de calcul 220. Et à cette adresse $(\alpha_o, \beta_o)$ se trouvent les coordonnées (X,Y) d'un point M de l'image source I qui est ainsi mis en correspondance avec le pixel de départ $M^*(X^*,Y^*)$ de l'image cible I*.

Donc, dans la construction de l'image cible selon l'invention, entrent en jeu deux sortes d'approximations distinctes.

Une première approximation dans le calcul des coordonnées sphériques $(\alpha, \beta)$ d'un rayon lumineux approché $PW_H^*$, au lieu du rayon lumineux réel $P_\mu$, du fait que l'on choisit pour la fonction $G^{-1}$ des relations simplifiées trigonométriques de X*, Y* au lieu des équations exactes liant $(X^*,Y^*)$ à $(\alpha, \beta)$.

Une seconde approximation dans la détermination des points M(X,Y), du fait que l'on fournit les coordonnées (X,Y) comme les couples, calculés de manière exacte, dans une phase initiale par la fonction F, qui correspondent à des couples $(\alpha_o, \beta_o)$ prédéterminés A PRIORI et prétabulés, et non pas aux couples $(\alpha, \beta)$ réellement calculés par $G^{-1}$.

Le bloc 204, par exemple une table du genre LUT (de l'anglais LOOK UP TABLE), peut être chargé directement dans une étape d'initialisation à l'aide des données relatives à l'image source contenues dans le bloc fonctionnel 21 et sur lesquelles on applique la fonction F pour un nombre de couples $(\alpha_o, \beta_o)$ prédéterminés.

Le bloc 21 est un bloc mémoire qui stocke les paramètres de l'image source $\varphi$, $\theta$ et d.

**D/ Dispositif de traitement d'images comprenant des caméras fixes et un système simulant une caméra mobile"**

L'invention concerne également un dispositif de traitement d'images comprenant :

un système de n caméras réelles fixes, disposées de manière à ce que leurs champs de vue individuels fusionnent pour former un seul champ de vue de grand angle pour l'observation d'une scène panoramique,
un système de construction d'image simulant une caméra dite virtuelle, mobile, balayant continûment la scène panoramique pour en fournir, en temps réel, une sous-image dite cible, correspondant à une section arbitraire du champ de vue de grand angle, et construite à partir des images sources adjacentes fournies par les n caméras réelles, cette caméra virtuelle ayant un point de fuite confondu avec, ou proche de celui des caméras réelles.

Cette invention trouve son application dans le domaine de la télésurveillance, ou bien dans le domaine de la télévision, lorsque des prises de vue couvrant des grands champs sont nécessaires, par exemple dans le cas d'enregistrement de scènes de manifestations sportives. L'invention trouve aussi son application dans le domaine de la construction automobile pour réaliser des rétroviseurs périphériques et panoramiques sans angle mort.

Comme application du système de reconstruction d'image décrit précédemment, la présente invention a pour but de fournir un dispositif capable de simuler une caméra mobile, balayant le champ de vue de grand angle couvert par les n caméras fixes dont les champs de vue fusionnent. Le but de la présente invention est tout particulièrement de fournir un tel dispositif simulant une caméra munie de toutes les facilités que pourraient avoir une caméra mobile existant réellement : c'est-à-dire à partir d'un observateur qui est fixe, des possibilités de déplacements angulaires horizontaux vers la gauche ou la droite d'une scène panoramique à observer ou à surveiller, des possibilités de déplacements angulaires verticaux vers le haut ou vers le bas de cette scène, et en outre des possibilités de zoom sur une partie de la surface de cette scène.

Des problèmes techniques se posent alors à la construction de l'image cible. En effet, pour fournir les facilités d'une caméra réelle, la caméra virtuelle doit avant tout permettre la construction de l'image cible en temps réel. Cela signifie que le temps de calcul doit être suffisamment faible. Or, la construction de l'image cible dans le cas envisagé pose en réalité des problèmes techniques de calculs géométriques compliqués.

Un premier problème vient du fait que, bien que l'on dispose d'une pluralité de caméras réelles positionnées de manière adjacentes et de telle sorte que le champ couvert par chacune ne laisse échapper aucune zone de la scène panoramique à construire, et que l'on dispose ainsi de toutes les données pour construire l'image cible, néanmoins, à chaque frontière entre les caméras, au passage d'une image fournie par une caméra à une autre image d'une caméra adjacente, pour deux zones adjacentes de la scène enregistrées par ces deux caméras différentes, il existe de grandes distorsions d'image purement dues à la différence d'angle de visée des deux caméras.

Un second problème vient du fait que, dans la plupart des cas, pour effectuer une surveillance sur un champ de vue de grand angle tout en utilisant un nombre minimal de caméras réelles fixes, les caméras réelles employées sont des caméras dont les optiques sont elles-mêmes du type "grand angulaire" (en anglais FISH-EYE). Ce type d'objectif produit des distorsions importantes et typiques. En particulier, les lignes horizontales et verticales sont en forme d'arc de cercle.

Il en résulte que, si les problèmes cités ne sont pas résolus, les images cibles qui sont réalisées à cheval sur deux zones de la scène enregistrée par deux caméras différentes sont très inconfortables à visualiser et manquent totalement de précision. C'est pourquoi, la mise en correspondance géométrique des parties d'image provenant de différentes caméras réelles fixes doit être menée à bien en prenant en compte et en compensant les distorsions dues :

à la différence des angles de visée,
aux défauts optiques des objectifs des caméras réelles fixes.

De plus, ce traitement d'image doit être mené à bien en temps réel.

Un but de l'invention est donc de fournir un dispositif qui remplit la fonction de reconstruction de l'image cible en temps réel en s'affranchissant de la nécessité d'utiliser des transformations géométriques complexes qui peuvent seulement être réalisées par les produits de commerce coûteux, comme il a été dit précédemment. Selon l'invention ce but est atteint au moyen d'un dispositif de traitement d'image décrit ci-après.

Avec ce dispositif, l'utilisateur qui surveille une scène panoramique obtient exactement le même confort, et les mêmes services qu'un utilisateur qui disposerait d'une caméra mobile, avec zoom, et avec des moyens mécaniques pour réaliser la variation de l'orientation de l'axe optique, c'est-à-dire pour réaliser des variations de site et d'azimut de la visée. L'avantage est que les moyens mécaniques sont évités. Ces moyens mécaniques, qui incluent des moteurs de rotation mécanique d'angles de site et d'azimut, et un moteur de réglage du zoom, sont toujours liés à des inconvénients : d'abord ils peuvent se bloquer, ensuite les déplacements engendrés sont très lents. De plus, il sont très onéreux. Enfin, étant le plus souvent installés en extérieur, ils se dégradent rapidement du fait des intempéries. Les moyens électroniques de traitement d'image utilisés selon l'invention évitent tous ces inconvénients, car ils sont très précis, fiables, très rapides et faciles à commander. En outre, ils peuvent être disposés en intérieur, et ainsi à l'abri des intempéries. De plus, les moyens électroniques sont facilement programmables pour un fonctionnement automatique. Enfin, ils sont moins onéreux que les moyens mécaniques.

Ainsi l'utilisateur obtient, avec les moyens de l'invention, d'abord une image agréable à observer et ensuite des plus grandes précisions et facilités pour l'exécution des manoeuvres de visée, que s'il disposait de moyens mécaniques. En outre, une scène panoramique de plus grand champ peut être observée, puisque l'on peut observer des champs de 180° ou même 360° selon le nombre de caméras utilisées. En matière de surveillance, il en résulte un grand progrès.

Le fait d'utiliser plusieurs caméras pour faire la saisie des données nécessaires à la construction de l'image cible n'est pas un désavantage, car un tel ensemble de caméras fixes, à CCD (dispositif à couplage de charge), est devenu moins onéreux que ne le seraient les dispositifs mécaniques de variation de site, d'azimut et de rotation, ainsi que de zoom, associés à une seule caméra réelle mobile.

### D1/ <u>Le système de prise de vue</u>

La Fig.10C montre en coupe une disposition possible de plusieurs caméras fixes réelles pour enregistrer les données relatives à une scène de 180° d'angle. L'enregistrement de cette scène panoramique est fait avec trois caméras fixes C1, C2, C3. Les champs optiques des caméras sont tels qu'absolument tous les détails de la scène panoramique sont enregistrés par une caméra ou par une autre, de manière à ne laisser échapper aucun objet de la surveillance. Les caméras sont disposées de manière à avoir un point de fuite commun P (en anglais : VIEW POINT) ou des points de fuite très proches.

Les axes PZ1, PZ2, PZ3 représentent respectivement les axes optiques des caméras C1, C2, C3 ; et les points O1, O2, O3 représentent respectivement les centres géométriques des images I1, I2, I3, dans les plans images, sur les axes optiques.

L'homme du métier peut, sans description plus approfondie des diverses dispositions des caméras fixes les unes vis-à-vis des autres, réaliser toute sorte d'observation d'une scène panoramique. D'une manière générale, le dispositif de prise de vue comprend une pluralité de n caméras réelles fixes, de focales fixes et connues, disposées de manière adjacente, et de telle sorte que leurs champs de vue individuels fusionnent pour couvrir un champ de vue de grand angle.

Ainsi, les n caméras fixes adjacentes fournissent n images fixes adjacentes, de sorte que ce dispositif de prise de vue peut surveiller une scène panoramique. Les champs optiques des caméras sont tels que tous les détails de la scène panoramique sont enregistrés par une caméra ou par une autre, pour ne laisser échapper aucun objet de la surveillance. Pour obtenir ce résultat, ces n caméras fixes adjacentes sont en outre disposées de telle sorte que leurs centres optiques P, encore appelés points de fuite (ou VIEW POINT en anglais) coïncident.

En fait, les points de fuite des n caméras ne peuvent pas physiquement coïncider. Mais on considère ci-après que la condition de coïncidence est suffisamment bien remplie si la distance qui sépare chacun de ces points de fuite les uns des autres est petite vis-à-vis de leur distance à la scène panoramique filmée, par exemple si leur distance respective est 5 cm ou 10 cm, et la distance à la scène panoramique est 5 m. Ainsi la condition de coïncidence est estimée remplie si le rapport de ces distances est de l'ordre de, ou supérieur à, 50.

### D2/ <u>La formation des images par les caméras</u>

Le but de l'invention est de fournir un système de reconstruction d'image numérique qui simule une caméra mobile capable, avec des réglages choisis par un utilisateur, de fournir en temps réel une image numérique de n'importe quelle partie, ou sous-image, de la scène panoramique enregistrée par les n caméras fixes.

Les n caméras fournissent respectivement des images dites sources numériques I1..., Ii, Ij..., In. Dans ce qui suit, on considérera par exemple les images sources Ii et Ij formées par deux caméras réelles fixes adjacentes parmi les n.

En référence à la FIG.10A, ces caméras Ci et Cj réelles fixes contiguës forment des images respectives de la scène panoramique dans des plans images sources adjacents Ii et Ij. En référence avec la FIG.10B, on définit le repère absolu PXa, PYa, PZa, d'axes orthogonaux dans lequel les axes PXa et PZa sont horizontaux, et l'axe PYa est vertical. Les images sources Ii et Ij, sont numérisées, et chaque pixel M de ces images est repéré par ses coordonnées dans un repère individuel lié à chaque plan image comme il a été décrit précédemment en référence aux FIG.3A, 3B.

Une fois établis les repères individuels liés à chaque plan image des caméras, ces plans images sources fixes peuvent être liés au repère terrestre par :

leur angle d'azimut (PANNING) $\theta_i$, $\theta_j$,
leur angle de site (TILTING) $\varphi_i$, $\varphi_j$.

Sur la FIG.10A, les axes PTai et PTaj sont les projections des axes optiques PZi et PZj, les points 0ai, 0aj sont les projections des centres optiques Oi et Oj, et les segments Iai et Iaj sont les projections des plans images Ii et Ij dans le plan de la figure, qui est le plan horizontal (PZa, PXa) du repère absolu. Donc :

$$\theta_i = (PTai, PZa) ;$$

$$\theta_j = (PTaj, PZa).$$

Les angles φi et φj relatifs aux images sources Ii et Ij peuvent être déterminés comme dit précédemment en référence avec la FIG.6A, de sorte que :

$$\varphi i = (PZi, PTai)$$

et

$$\varphi j = (PZj, PTaj).$$

La FIG.11A montre de face les images Ii et Ij adjacentes de la scène panoramique fournies par deux caméras fixes contiguës. Sur la FIG.11A, pour la simplicité de l'exposé, les images Ii et Ij sont représentées toutes les deux de face dans le plan de la figure, alors que dans la réalité, ces images font entre elles un angle égal à celui des axes optiques des caméras fixes. Dans ces images, l'utilisateur peut choisir de regarder n'importe quelle sous-image délimitée par la ligne Jo, plus ou moins à gauche ou à droite, plus ou moins en haut ou en bas, avec le même grandissement que les caméras fixes, ou avec un grandissement supérieur, ou éventuellement avec un grandissement inférieur.

La caméra mobile simulée est capable de construire l'image cible I* à partir des parties d'image source Si, Sj délimitées par la ligne Jo de la FIG.11A. Cette caméra référencée C* ci-après est appelée caméra virtuelle du fait qu'elle simule une caméra non réellement existante. Evidemment cette caméra mobile n'est pas limitée à explorer les deux images Ii, Ij. Elle peut explorer toutes les images sources de I1 à In, comme il a été dit précédemment ; et elle peut éventuellement construire l'image cible à partir de plus de deux images sources adjacentes.

L'image cible I* est définie comme précédemment au moyen de :

son angle d'azimut θ*
son angle de site φ*
son facteur d'échelle d*, sa hauteur $2V_y^*$ parallèlement aux colonnes et sa largeur $2V_x^*$ parallèlement aux lignes de pixels. Son point de fuite est confondu avec les points de fuite approximatifs des caméras réelles fixes, et avec l'origine absolue P. Le point O* est le centre géométrique de l'image cible I*.

La FIG.10A montre la projection notée Ia* du plan image cible I* de la caméra virtuelle dans le plan horizontal, et la projection PTa* de son axe optique PZ*, cette projection PTa* passant par la projection Oa* du centre géométrique O* de l'image cible I*. Ainsi, en faisant varier les angles d'azimut et de site, θ* et φ*, et son facteur d'échelle d*, et son cadrage $2V_x^*$, $2V_y^*$, la caméra virtuelle est tout à fait assimilable à une caméra mobile en temps réel, qui balaye le champ de vue de grand angle formé par les champs de vue fusionnés des différentes caméras réelles fixes.

En référence à la FIG.11A, on remarquera que la caméra virtuelle C* peut viser une partie petite (ou sous-section), délimitée par Jo, du champ de vue de grand angle et en réaliser une image agrandie I* par exemple de même dimension finale que chacune des images I1...In fournie par chacune des caméras réelles, en jouant sur sa focale variable PO*. On remarquera également que le déplacement du champ de vue de la caméra mobile C* peut être continu et arbitraire.

On va traiter ci-après le cas où le champ de vue correspondant à Jo se trouve à cheval sur deux parties (Si, Sj) d'image Ii et Ij contiguës en LO, fournies par deux caméras adjacentes. L'homme du métier pourra ensuite généraliser aux autres cas concernant plus de deux images sources.

En référence à la FIG.11B, dans le cas où l'image I* construite par la caméra virtuelle C* contient deux parties d'image différentes, l'une Ii* est construite à partir des informations Si contenues dans l'image numérique Ii, et l'autre Ij* est construite à partir des informations Sj contenues dans l'image numérique Ij. Dans la FIG.9A, Iai* et Iaj* représentent les projections des images cibles Ii* et Ij* dans le plan horizontal. Comme décrit précédemment, on définit maintenant, pour l'image cible numérique I*, un repère de coordonnées rectangulaires individuel. Chaque pixel M* du plan image cible I* est donc repéré par ses coordonnées dans ce repère individuel cible. On définit également les dimensions en pixels $2V_x^*$, $2V_y^*$ de l'image cible.

## D3/ **La méthode de construction de l'image cible à partir des images sources**

La tâche des moyens de traitement d'images numériques selon l'invention est donc la construction en temps réel de "l'image cible" fournie par la caméra virtuelle, à partir des "images sources" fournies par les caméras réelles fixes.

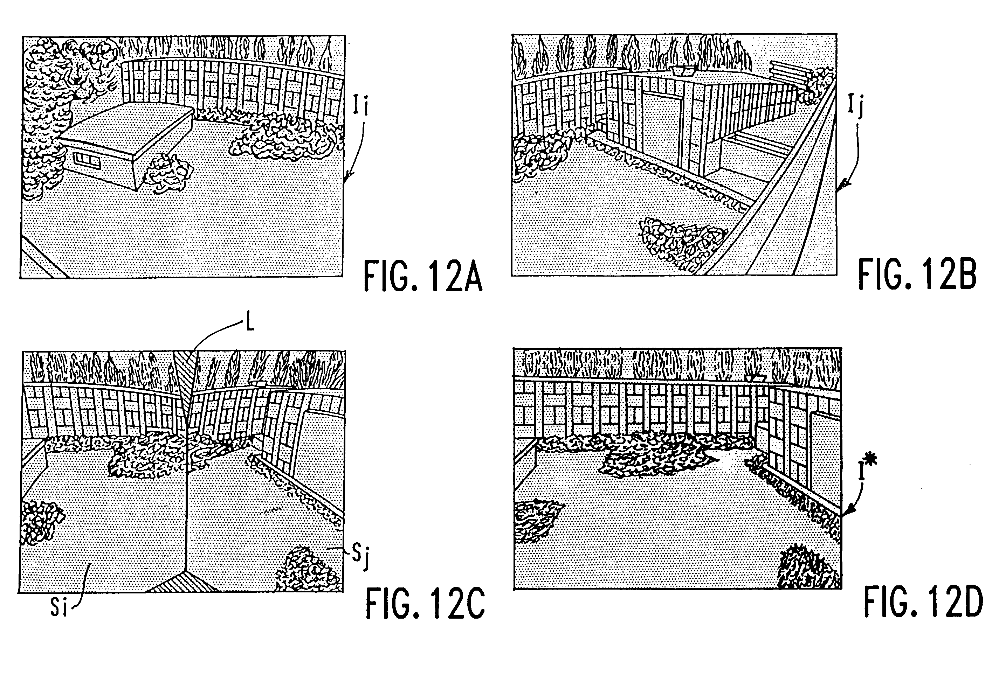

On a vu que, dans la construction de l'image cible I*, se posait un problème technique parce que les images gauche et droite Ii et Ij adjacentes fournies par les caméras réelles contiguës, telles que représentées sous forme d'images numériques de paysage sur les FIG.12A et 12B, respectivement, montrent des distorsions qui font qu'elles ne se raccordent pas correctement : en particulier certaines parties de lignes droites sont courbes, les verticales ne sont pas verticales etc. Ce qui fait que, au raccord, ces lignes vont être sécantes au lieu d'être dans le prolongement les unes des autres. De plus, les parties d'images sources de part et d'autre du raccord proviennent de parties de la scène panoramique à observer qui sont vues sous des perspectives différentes. D'où il résulte que les parties d'image cible Ii* et Ij* pourraient être mal raccordées, comme il apparaît dans l'image numérique cible représentée à titre d'exemple sur la FIG.12C et formée par la juxtaposition pure et simple des parties des images numériques adjacentes gauche et droite des FIG.12A et 12B.

La présente invention propose une méthode et des moyens pour s'affranchir de ces défauts et fournir une image numérique reconstruite en temps réel qui est dépourvue des défauts de distorsions et de perspectives, et dont les parties Ii* et Ij* qui la composent se raccordent de manière telle que la droite frontière est invisible pour l'observateur et utilisateur.

La FIG.12D montre l'image numérique du paysage de la FIG.12C dans laquelle les défauts de distorsion et perspective ont été corrigés par les moyens de l'invention. L'homme du métier, s'il est averti, peut constater que maintenant les lignes horizontales sont complètement rectilignes et non faiblement arrondies comme cela se produirait si la prise de vue avait été effectuée directement avec un objectif grand angle par une caméra réelle. Par ailleurs, les verticales sont complètement verticales, et non fuyantes, comme cela se produirait lors de l'observation à l'oeil nu, ou lors de la prise de vue par une caméra réelle. Cela résulte du choix qui a été fait dans le calcul de la fonction $G^{-1}$ de projeter l'image cible I* sur le plan H pour obtenir l'image H*. On obtient une rectification de perspective encore appelée "perspective architecturale rectifiée". Il s'ensuit que les images rectifiées sont particulièrement agréables à regarder, et souvent plus que des images "exactes".

Ainsi, on pourra constater que l'image de la FIG.12D obtenue selon l'invention est beaucoup plus agréable à regarder qu'une image réelle telle que celle des FIG.12A ou 12B. En outre la frontière de construction de l'image cible, que l'on voyait sur la FIG.12C, n'existe plus dans la FIG.12D.

La méthode générale de construction de l'image cible comprend différentes étapes qui sont mises en oeuvre par le dispositif de traitement de signal décrit plus loin. Cette méthode comprend d'abord une étape où :

à chaque pixel M* ayant une adresse (X*,Y*) dans l'image cible I*, on fait correspondre un point M à une adresse (X,Y) dans une image source, cette adresse étant définie par :

la référence ou indice de la caméra réelle qui va fournir l'image source ;
l'adresse (X,Y) du point M dans cette image source.

Cette méthode comprend alors une seconde étape où :

la valeur la plus probable de la luminance Q est évaluée en ce point M de l'image source,
puis cette valeur de luminance est affectée au pixel M* dans l'image cible.

Ces étapes sont menées pour tous les pixels M* de l'image cible I*.

Les moyens de traitement rendent au mieux, à l'image cible construite en temps réel, toutes les qualités d'une image confortable pour l'observateur :

distorsions minimales, ajustage des perspectives,
absence de droite de coupure à la frontière entre deux images adjacentes.

D 4/ **Le dispositif de traitement d'image**

La Fig.14 montre sous forme de blocs fonctionnels les différents éléments du dispositif de traitement d'image selon l'invention.

Les blocs I1, Ii, Ij.., In représentent n plans mémoires dont les sorties fournissent les n images sources notées I1,... Ii, Ij.., In.

Chacune des images sources est affectée de paramètres de prise de vue correspondant à l'orientation de la caméra réelle correspondante par rapport à la scène, ainsi qu'un facteur d'échelle. Ces paramètres doivent être connus ou déterminés de manière très précise.

L'ensemble 1 représente un système de contrôle qui permet à l'utilisateur de choisir et d'afficher des paramètres relatifs à l'orientation et au cadrage de la caméra virtuelle C*.

L'ensemble 100 est le système de reconstruction d'image qui permet de calculer, à partir des images sources I1....In fournies par les caméras réelles, l'image cible I* qui serait donnée par la caméra virtuelle C* orientée et réglée avec les paramètres définis par le système de contrôle, cette caméra virtuelle C* étant disposée de telle sorte que son point de fuite est confondu ou proche du point de fuite P des caméras réelles.

Le bloc 10 correspond à des moyens d'affichage, ou bien d'enregistrement, qui peuvent être entre autres, un moniteur d'affichage numérique pour l'affichage en temps réel et/ou un magnétoscope pour l'enregistrement sur bandes magnétiques etc...

D'autre part, il faut noter que les caméras réelles peuvent fournir des données analogiques. Dans ce cas, des modules de conversion analogique-numérique non représentés sont utilisés pour former les images sources numériques.

D'une façon avantageuse, l'homme du métier peut choisir des caméras à couplage de charges (CCD, de l'anglais Charge Coupled Device). Ce genre de caméra est peu onéreux, léger, robuste et fiable. Sa résolution est très bonne, et peut encore augmenter dans le futur en fonction de l'évolution des technologies.

En référence à la FIG.13, le dispositif de traitement d'image comprend en particulier dans l'ensemble 1, une interface utilisateur 2, et des moyens de stockage 210 des paramètres $\varphi^*$, $\theta^*$, $d^*$, et des moyens de stockage du cadrage $2V_x^*$, $2V_y^*$ de la caméra virtuelle $C^*$.

En référence à la FIG.14, le dispositif comprend aussi :

dans l'ensemble 100, un calculateur d'adresse 200, incluant un générateur d'adresse 113 qui génère les adresses $(X^*,Y^*)$ des pixels de l'image cible $I^*$, pixel par pixel, de manière à couvrir la totalité de cette image cible $I^*$ ; et des moyens de stockage 21 des paramètres $\varphi 1$ à $\varphi n$, $\theta 1$ à $\theta n$, et $d1$ à $dn$ les facteurs d'échelles des caméras réelles $C1$ à $Cn$ respectivement,

des moyens de stockage 117.

Pour chaque pixel $M^*$ de l'image cible $I^*$ à construire, une adresse $(X^*, Y^*)$ est fournie par le bloc 113 générateur des adresses dans l'image cible $I^*$. En fonction des réglages choisis par l'utilisateur qui sont entrés dans le bloc de contrôle 1 au moyen d'une interface-utilisateur proprement dite 2, et qui sont stockés sous la forme des paramètres $\varphi^*$, $\theta^*$, $d^*$ et $V_x^*$, $D_y^*$ de la caméra virtuelle dans les blocs 210 et 201 respectivement, et en fonction des paramètres $\varphi j$, $\theta j$, et $dj$ ($j$ représentant ici l'indice de toutes les caméras de 1 à $n$) des caméras réelles qui sont stockés dans le bloc 21, le calculateur d'adresse 200 fournit l'index $j$ (parmi tous les indices 1 à $n$) de la caméra réelle capable de fournir l'image $Ij$ où trouver les données correspondant à l'adresse $(X^*, Y^*)$ du pixel $M^*$ de l'image cible $I^*$, et calcule l'adresse $(X,Y)$ du point $M$ correspondant dans cette image source $Ij$ sélectionnée, et ceci à travers les différentes transformations ou perspectives imposées par l'utilisateur en 2. Par ces opérateurs, on établit donc une correspondance entre un pixel $M^*$ à une adresse donnée $(X^*,Y^*)$ de l'image cible $I^*$, et un point $M$ à une adresse calculée $(X,Y)$ d'une image source $Ij$.

Puis, la valeur de la luminance Q au point $M$ à l'adresse $(X,Y)$ dans l'image source $Ij$ est déterminée, afin d'être affectée au pixel correspondant $M^*$ à l'adresse $(X^*,Y^*)$ dans l'image cible $I^*$. Et ainsi pour tous les pixels de l'image cible $I^*$.

Mais, alors que l'adresse $(X^*,Y^*)$ dans l'image cible $I^*$ est réellement celle d'un pixel $M^*$, à la différence, l'adresse $(X,Y)$ dans l'image source $Ij$ est précisément une adresse calculée, ce qui fait que, en général, cette adresse trouvée ne coïncide pas avec un pixel, mais avec un point $M$ disposé entre des pixels. La luminance de ce point $M$ doit donc être également calculée.

Ce problème est traité par l'interpolateur 112. L'interpolateur 112 prend en compte une valeur d'une fonction de luminance des pixels, par exemple $m1$, $m2$, $m3$, $m4$ d'un voisinage du point $M$ $(X,Y)$, pour calculer la fonction de luminance correspondant au point $M(X,Y)$ en question par une méthode d'interpolation. Ainsi le bloc 112 calcule la fonction de luminance la plus probable à affecter à ce point $M$ d'adresse $(X,Y)$. La fonction de luminance Q calculée par l'interpolateur à l'adresse $(X,Y)$ dans les images sources, est ensuite attribuée comme valeur de fonction de luminance au pixel $M^*$ situé à l'adresse de départ $(X^*,Y^*)$ dans l'image cible $I^*$, et stockée dans le bloc 117.

Le calculateur d'adresse 200 utilisé est celui qui a été décrit plus haut en détail en référence avec la FIG.13, dans le cas du traitement d'une seule image source. Dans le cas de plusieurs images sources, le calculateur 200 comprend en particulier le module 204, qui est "chargé" lors d'une étape d'initialisation, avec les données stockées dans le bloc 21, concernant toutes les caméras réelles, et qui fournit directement l'indice $j$ de l'image source et l'adresse $(X,Y)$ dans cette image source, ces données étant "lues dans la sphère S" au pixel $K_o$ $(\alpha_o, \beta_o)$ correspondant au point $K(\alpha,\beta)$ calculé par le module 220, comme déjà décrit.

En référence à la Fig.14, l'image $I^*$ peut alors être reconstituée dans le bloc de stockage 117 en faisant correspondre à chaque pixel $M^*$ d'adresse $(X^*,Y^*)$ une valeur de la fonction Q de luminance. L'image cible est maintenant construite.

L'image $I^*$ peut ensuite être affichée, ou stockée dans les moyens 10.

Si on se trouve dans le cas où plusieurs images sources sont possibles, par exemple parce qu'on a recouvrement des images sources dans une région frontière, le bloc 204 est tabulé pour fournir directement une seule des deux images-sources. A cet effet, lors de la tabulation, une méthode de sélection entre deux images consiste à décider que le raccord entre deux images dans la région frontière est constitué par une ligne droite qui passe sensiblement au milieu de la zone de recouvrement. Cette convention est applicable au cas des caméras juxtaposées horizontalement comme sur la Fig.10 avec des raccords verticaux.

En référence à la FIG.15, on a représenté un diagramme de blocs fonctionnels pour mettre en oeuvre la fonction $G^{-1}$, c'est-à-dire pour calculer

$$\alpha = A^* + \theta^* \qquad \qquad 23a)$$

$$\beta = \text{arctg} [Y^* - Yo) (\cos A^*)/d^*] \qquad \qquad 22b)$$

avec

$$A^* = \text{artg} (X^*/d^*) \qquad \qquad 20a)$$

et

$$Yo = d^*.tg^*\varphi^* \qquad \qquad 19).$$

Cette partie 220 du dispositif comprend donc :

le système générateur d'adresse 113, qui fournit les coordonnées $(X^*, Y^*)$ de tous les pixels $M^*$ de l'image cible $I^*$ les uns après les autres ;
le système de stockage 210 des paramètres de l'image cible ;
un système de traitement de la première coordonnée $X^*$ pour fournir la coordonnée sphérique $\alpha$, comportant :

un inverseur 52 pour fournir l'inverse du facteur d'échelle $d^*$ prélevé dans le bloc mémoire 210,
un multiplicateur 51 pour multiplier la première coordonnée $X^*$ et $1/d^*$,
un module 58 de calcul d'arctg appliqué au résultat fourni par le multiplicateur 51, et qui fournit la variable intermédiaire $A^*$,
un additionneur 59 qui reçoit le paramètre $\theta^*$ du bloc 210 et la variable intermédiaire $A^*$ et qui fournit la première coordonnée sphérique $\alpha$,

un système de traitement de la deuxième coordonnée $Y^*$ pour fournir la coordonnée sphérique $\beta$ comportant :

un multiplicateur 54 qui reçoit le résultat $(1/d^*)$ de l'inverseur 52 et la variable $Y^*$,
un module de calcul de tg, 57 qui reçoit le paramètre $\varphi^*$ de l'image cible fourni par le bloc 210,
un soustracteur 55 qui reçoit le résultat $(Y^*/d^*)$ du multiplicateur 54, et la valeur $tg\varphi^*$ issue du bloc 57, et dont le résultat est appliqué à l'entrée d'un multiplicateur 56,
un bloc 60 de calcul de cos qui reçoit la variable intermédiaire $A^*$ et fournit $\cos A^*$ à l'entrée du multiplicateur 56,
le multiplicateur 56 qui reçoit le résultat du bloc additionneur 55 et $\cos A^*$,
le module de calcul 61 d'arctg qui reçoit le résultat du multiplicateur 56 et fournit la deuxième coordonnée sphérique $\beta$.

Les autres éléments représentés sur la FIG.15 le sont aussi sur la FIG.14. Les blocs de calcul de lignes trigonométriques (cos, arctg, tg) et le bloc inverseur peuvent être constitués par des moyens de tabulation (LUT) fixes, lesquels peuvent par exemple être chargés en mémoires ROM.

En remarque, on peut noter que ce qui a été dit pour le codage des pixels en niveau de gris ou luminance peut s'appliquer au codage d'une image couleur. Le codage s'effectue simplement sur un plus grand nombre de bits. Ainsi, dans des variantes de l'invention, la fonction Q à déterminer au point M d'une image source I
ou Ij et à attribuer au pixel $M^*$ de l'image cible $I^*$, peut être :

soit la fonction de luminance déjà décrite,
soit une fonction de chrominance,
soit une fonction de luminance et de chrominance,
soit une fonction d'intensité de rayons X,

soit une fonction d'intensité de rayons Y, etc...

D'une manière générale, la fonction Q est une fonction caractéristique du signal numérique au point M calculé dans l'image source. On notera que, pour qu'aucun raccord ne soit sensible dans l'image cible, il est nécessaire de prendre plusieurs mesures :

la calibration précise des caméras fixes,
la correction des résultats par des rebouclages, suivie d'une modification éventuelle des paramètres des modèles des caméras fixes jusqu'à ce qu'on obtienne une juxtaposition parfaite conduisant à une image cible sans défaut.

Cette opération, ou initialisation, doit être comprise comme une partie intégrante de l'opération de calibrage.

**TABLEAU I**

$$\begin{pmatrix} \cos\beta^* . \sin\alpha^* \\ \cos\beta^* . \cos\alpha^* \\ \sin\beta^* \end{pmatrix} = \begin{pmatrix} \cos\theta^* & +\sin\theta^* & 0 \\ -\sin\theta^* & \cos\theta^* & 0 \\ 0 & 0 & 1 \end{pmatrix} \begin{pmatrix} 1 & 0 & 0 \\ 0 & \cos\varphi^* & +\sin\varphi^* \\ 0 & -\sin\varphi^* & \cos\varphi^* \end{pmatrix} \begin{pmatrix} \cos B^* . \sin A^* \\ \cos B^* . \cos A^* \\ \sin B^* \end{pmatrix}$$

**TABLEAU II**

$$\begin{pmatrix} \cos B . \sin A \\ \cos B . \cos A \\ \sin B \end{pmatrix} = \begin{pmatrix} 1 & 0 & 0 \\ 0 & \cos\varphi & -\cos\varphi \\ 0 & \sin\varphi & \cos\varphi \end{pmatrix} \begin{pmatrix} \cos\theta & -\sin\theta & 0 \\ \sin\theta & \cos\theta & 0 \\ 0 & 0 & 1 \end{pmatrix} \begin{pmatrix} \cos\beta . \sin\alpha \\ \cos\beta . \cos\alpha \\ \sin\beta \end{pmatrix}$$

## Revendications

**1.** Procede de traitement d'image numérique pour construire au moyen d'une transformation géométrique de perspective appliquée à une image dite image source (I), une image calculée, dite image cible (I*), qui représente l'image source reconstruite avec des modifications d'au moins un des paramètres suivants :angles de site, d'azimut, et facteur d'échelle vis-à-vis de l'image source, **caractérisé en ce qu'**il comprend des étapes de construction de l'image cible (I*) avec des rectifications des défauts de perspective corrections des aberrations sphériques, incluant :

la détermination d'un centre optique commun (P) pour l'image source (I) et l'image cible (I*), et d'un repère orthonormé de référence ayant pour origine ce centre optique (P), et la mesure des angles de site ($\varphi$*), d'azimut ($\theta$*) et du facteur d'échelle (d*) de l'image cible (I*) dans ce repère de référence,

la définition d'une image (H*) dite de projection de l'image cible (I*), d'angle d'azimut nul ($\theta$*), d'angle de site ($\varphi$*) égal à celui de l'image cible (I*), de centre géométrique ($\Omega_H$*) aligné sur l'axe optique (PZ*) de l'image cible, et de même cadrage ($2V_x$*, $2V_y$*) que l'image cible (I*) de telle sorte que tout pixel (M*) d'adresse (X*, Y*) dans l'image cible (I*) a un correspondant par projection ($M_H$*) avec la même adresse (X*,Y*) dans l'image de projection (H*), et le plan (H) de projection de l'image cible (I*) selon l'image de projection (H*) étant situé à une distance de l'origine (P) du repère de référence, égale au facteur d'échelle (d*) de l'image cible,

le calcul, pour tout pixel dit pixel de départ (M*) d'adresse (X*, Y*) dans l'image cible, d'un couple dit de coordonnées sphériques ($\alpha$, $\beta$) définissant, dans le repère de référence, le rayon liant l'origine (P) au pixel correspondant ($M_H$*) situé dans l'image de projection (H*), au moyen d'une fonction trigonométrique ($G^{-1}$), telle que : ($\alpha$, $\beta$) = $G^{-1}$ (X*, Y*), ce calcul comprenant un premier et un second calcul de la première et de la seconde coordonnées sphériques ($\alpha$, $\beta$) au moyen d'une première et d'une seconde relations trigonométriques de la première et de la seconde coordonnées du pixel ($M_H$*) correspondant par projection dans l'image de projection (H*) du pixel de départ (M*), ces relations trigonométriques ayant pour coefficients des fonctions des angles de site ($\varphi$*), d'azimut ($\theta$*) et du facteur d'échelle (d*) de l'image cible (I*), en sorte que ces relations trigonométriques sont :

$$\alpha = A^* + \theta^* \text{ et } \beta = \text{arctg } [(Y^* - Yo) (\cos A^*)/d^*]$$

avec

$$A^* = \text{arctg } (X^*/d^*) \text{ et } Yo = d^*.\text{tg } \varphi^*$$

la lecture, dans une table, par la mise en correspondance, à la résolution de la table près, du couple calculé de coordonnées sphériques ($\alpha$, $\beta$) avec l'une des adresses ($\alpha_o$, $\beta_o$) de la table, d'un couple (X,Y) qui y est stocké et qui constitue l'adresse d'un point (M) dans l'image source (I) correspondant au pixel de départ (M*) dans l'image cible (I*).

2. Procédé selon la revendication 1, **caractérisé en ce qu'**il comprend le chargement de la table, dans une étape initiale, par des couples de coordonnées (X,Y) de points (M) définis dans un repère local de l'image source (I), et stockés à des adresses de cette table formées par des couples ($\alpha_o$, $\beta_o$) de coordonnées sphériques prédéterminées définis dans le repère de référence ayant pour origine le point de fuite commun, chaque couple de coordonnées (X, Y) étant lié à un couple ($\alpha_o$, $\beta_o$) de coordonnées sphériques par une fonction trigonométrique F ayant pour paramètres fixes les angles de site ($\varphi$), d'azimut ($\theta$) et le facteur d'échelle (d) de l'image source.

3. Procédé selon la revendication 2, **caractérisé en ce qu'**il comprend le calcul, avant chargement de la table, des couples de coordonnées (X,Y) de points (M) dans l'image source (I), liés aux couples de coordonnées sphériques ($\alpha_o$, $\beta_o$), ce calcul incluant un premier et un second calculs des première et seconde coordonnées (X,Y) de chaque point (M) de l'image source au moyen de première et seconde relations trigonométriques ayant pour variables les coordonnées sphériques ($\alpha_o$, $\beta_o$).

4. Procédé selon la revendication 4, **caractérisé en ce que** dans le calcul de chaque couple de coordonnées (X,Y) de points (M) dans l'image source, la première et la seconde relations trigonométriques sont respectivement :

$$X = d \cdot \text{tg}A \qquad \text{et} \qquad Y = d \cdot \text{tg}B/\cos A,$$

avec :

$$A = \text{arctg}(\frac{\cos\beta_o.\sin(\alpha_o-\theta)}{\cos\beta_o.\cos(\alpha_o-\theta).\cos\varphi - \sin\beta_o.\sin\varphi})$$

$$B = \arcsin(\cos \beta_o . \cos(\alpha_o - \theta) \sin \varphi + \sin \beta_o . \cos \varphi)$$

**5.** Procédé selon l'une des revendications 1 à 4, **caractérisé en ce qu'**il comprend la construction au moyen d'une pluralité de transformations géométriques appliquées respectivement à une pluralité de n images sources adjacentes (I1-In), ayant toutes un centre optique commun avec l'origine du repère de référence, d'une image cible qui représente des sous-parties adjacentes des images sources et qui est reconstruite avec des modifications d'au moins un des paramètres suivants : angle de site ou d'azimut et facteur d'échelle, vis-à-vis de chacune de ces sous-parties d'images sources, comprenant la lecture, dans la table, de l'adresse (X,Y) du point (M) de l'image source correspondant au pixel de départ (M*) de l'image cible, associée à la lecture à la même adresse de cette table d'un indice indiquant l'image source particulière parmi les n images sources où trouver ce point (M).

**6.** Procédé selon l'une des revendications 1 à 5, **caractérisé en ce qu'**il comprend l'évaluation d'une fonction caractéristique du signal numérique pour tout point (M) calculé dans l'image source (I), et l'attribution de cette fonction caractéristique à chaque pixel (M*) de départ correspondant dans l'image cible (I*).

**7.** Dispositif de traitement d'images numériques pour construire au moyen d'une transformation géométrique de perspective, appliquée à une image dite image source (I), une image calculée dite image cible (I*) qui représente l'image source reconstruite avec des modifications d'au moins un des paramètres suivants :
angles de site, d'azimut et facteur d'échelle vis-à-vis de l'image source, **caractérisé en ce que**, pour la construction d'une image rectifiée des défauts de perspective et
corrigée des aberrations sphériques, il comprend :

des moyens (201) pour caler le centre optique de l'image cible (I*) sur le centre optique (P) de l'image source (I) et pour définir un repère orthonormé de référence dont l'origine est située au centre optique commun (P) ;
un calculateur d'adresse (200) incluant des moyens de calcul (220) pour fournir pour tout pixel, dit pixel de départ (M*) d'adresse (X*,Y*) dans l'image cible (I*), un couple dit de coordonnées sphériques ($\alpha$, $\beta$) calculé dans le repère de référence, au moyen de la fonction trigonométrique calculée en mettant en oeuvre un procédé selon la revendication 1,
et des moyens de tabulation (204) pour fournir, à la résolution de ces moyens de tabulation près, pour chaque couple de coordonnées sphériques ($\alpha$, $\beta$) calculé, un couple (X,Y) qui est stocké et qui constitue l'adresse dans l'image source (I) d'un point (M) correspondant au pixel de départ (M*) dans l'image cible (I*).

**8.** Dispositif selon la revendication 7, **caractérisé en ce qu'**il comprend des moyens d'évaluation (112) d'une fonction caractéristique du signal numérique lié à tout point (M) calculé dans l'image source (I), et des moyens d'attribution (117) de cette fonction caractéristique à chaque pixel (M*) de départ correspondant dans l'image cible (I*).

**9.** Dispositif selon l'une des revendications 7 ou 8, **caractérisé en ce qu'**il comprend des modules de calcul de fonctions trigonométriques associés à des modules additionneurs ou multiplicateurs ou inverseurs pour mettre en oeuvre le calcul de la première coordonnée sphérique ($\alpha$) au moyen de la première relation trigonométrique ayant comme variable la première coordonnée (X*) du pixel (M*) de départ, dans un repère local de l'image cible (I*) et pour mettre en oeuvre le calcul de la seconde coordonnée sphérique ($\beta$) au moyen de la seconde relation trigonométrique ayant comme variable la seconde coordonnée (Y*) du pixel (M*) dans ce repère local, selon le procédé de la revendication 1.

**10.** Dispositif selon l'une des revendications 7 à 9, **caractérisé en ce qu'**il comprend un générateur d'adresse (113) pour générer les adresses (X*, Y*) des pixels (M*) de l'image cible (I*) dans un repère local.

**11.** Dispositif selon l'une des revendications 7 à 10, **caractérisé en ce qu'**il comprend des moyens de stockage (210) pour fournir les valeurs des angles de site ($\varphi^*$), d'azimut ($\theta^*$) de l'image cible (I*) dans le repère de référence, et son facteur d'échelle ($d^*$) et des moyens de stockage (201) pour fournir son cadrage ($V_x^*$, $V_y^*$).

**12.** Dispositif selon l'une des revendications 7 à 11, **caractérisé en ce qu'**il comprend des moyens de stockage (21) pour fournir les angles de site ($\varphi$) d'azimut ($\theta$) et le facteur d'échelle ($d$) de l'image source (I).

**13.** Dispositif selon l'une des revendications 7 à 12, **caractérisé en ce qu'**il comprend un module (2) d'interface au moyen duquel un utilisateur peut imposer des valeurs pour les angles de site ($\varphi^*$), d'azimut ($\theta^*$), le facteur d'échelle ($d^*$), et pour le cadrage ($V_x^*$, $V_y^*$) de l'image cible (I*).

**14.** Dispositif selon l'une des revendications 7 à 13, **caractérisé en ce qu'**il comprend des moyens d'affichage ou de stockage de l'image cible (I*) reconstruite.

**15.** Dispositif selon l'une des revendications 7 à 14, **caractérisé en ce qu'**il comprend des modules pour la formation d'une pluralité de n images sources numériques (I1-In) adjacentes ayant des centres optiques communs avec l'origine du repère de référence, et **en ce que**, pour la construction d'une image cible construite à partir de sous parties adjacentes de ces images sources, avec des modifications d'au moins un des paramètres suivants : angle de site, d'azimut et facteur d'échelle vis-à-vis de chacune de ces sous parties d'images sources, il comprend, dans les moyens de tabulations (204), associé à l'adresse (X,Y) d'un pixel (M) dans une image source particulière (I1-In), l'indice de cette image source particulière où trouver ce point (M).


**Patentansprüche**

**1.** Verfahren zur digitalen Bildverarbeitung, um mit Hilfe einer auf ein sogenanntes Quellenbild (I) angewendeten geometrischen Perspektiventransformation ein berechnetes Bild, ein sogenanntes Zielbild (I*) zu konstruieren, das das, in bezug auf das Quellenbild, mit Modifikationen von zumindest einem der folgenden Parameter: Kippwinkel, Schwenkwinkel und Maßstabsfaktor rekonstruierte Quellenbild darstellt, **dadurch gekennzeichnet, daß** es Schritte zur Konstruktion des Zielbildes (I*) umfaßt, mit Berichtigungen von Perspektivenfehlern und Korrekturen von sphärischen Aberrationen, die einschließen:

die Bestimmung eines gemeinsamen optischen Zentrums (P) für das Quellenbild (1) und das Zielbild (I*); und eines orthonormierten Bezugssystems, das dieses optische Zentrum (P) als Ursprung hat; und die Messung des Kippwinkels ($\varphi*$), des Schwenkwinkels ($\theta*$) und des Maßstabsfaktors (d*) des Zielbildes (I*) in diesem Bezugssystem;
die Definition eines sogenannten Projektionsbildes (H*) des Zielbildes (I*), mit Schwenkwinkel null ($\theta*$), Kippwinkel ($\varphi*$) gleich dem des Zielbildes (I*), auf der optischen Achse (PZ*) des Zielbildes ausgerichtetem geometrischem Zentrum ($\Omega_H*$) und von gleicher Bildeinstellung ($2V_x*$, $2V_y*$) wie das Zielbild (I*), solcherart, daß jeder Bildpunkt (M*) mit der Adresse (X*, Y*) im Zielbild (I*) eine Entsprechung durch Projektion ($M_H*$) mit gleicher Adresse (X*, Y*) im Projektionsbild (H*) aufweist, und wobei die Projektionsebene (H) des Zielbildes (I*) gemäß dem Projektionsbild (H*) sich in einem Abstand vom Ursprung (P) des Bezugssystems befindet, der gleich dem Maßstabsfaktor (d*) des Zielbildes ist;
die Berechnung, für jeden Bildpunkt, genannt Ausgangsbildpunkt (M*), mit der Adresse (X*, Y*) im Zielbild, eines Paares sogenannter sphärischen Koordinaten ($\alpha$, $\beta$), die im Bezugssystem den Strahl definieren, der den Ursprung (P) mit dem entsprechenden Bildpunkt ($M_H*$) verbindet, der sich im Projektionsbild (H*) befindet, und zwar mit Hilfe einer trigonometrischen Funktion ($G^{-1}$), so daß: ($\alpha$, $\beta$) = $G^{-1}$ (X*, Y*), wobei diese Berechnung eine erste und eine zweite Berechnung der ersten und der zweiten sphärischen Koordinate ($\alpha$, $\beta$) mit Hilfe einer ersten und einer zweiten trigonometrischen Gleichung für die erste und die zweite Koordinate des entsprechenden Bildpunktes ($M_H*$) durch Projektion in das Projektionsbild (H*) des Ausgangsbildpunktes (M*) umfaßt; wobei diese trigonometrischen Gleichungen als Koeffizienten die Funktionen des Kippwinkels ($\varphi*$), des Schwenkwinkels ($\theta*$) und des Maßstabsfaktors (d*) des Zielbildes (I*) haben, so daß diese trigonometrischen Gleichungen folgendermaßen lauten:

$$\alpha = A* + \theta* \text{ und } \beta = \arctan [(Y* - Yo) (\cos A*)/d*]$$

mit

$$A* = \arctan (X*/d*) \text{ und } Yo = d*.\tan \varphi* ;$$

das Aufsuchen in einer Tabelle, durch, bis auf die Auflösung der Tabelle, in Übereinstimmung bringen des berechneten Paares sphärischer Koordinaten ($\alpha$, $\beta$) mit einer der Adressen ($\alpha_o$, $\beta_o$) der Tabelle, eines gespeicherten Paares (X, Y), das die Adresse eines Punktes (M) im Quellenbild (I) bildet, der dem Ausgangsbildpunkt (M*) im Zielbild (I*) entspricht.

**2.** Verfahren nach Anspruch 1, **dadurch gekennzeichnet, daß** es in einem ersten Schritt das Laden der Tabelle mit Paaren von Koordinaten (X, Y) von Punkten (M) umfaßt, die in einem örtlichen System des Quellenbildes (I) definiert und unter Adressen dieser Tabelle gespeichert sind, die von Paaren ($\alpha_o$, $\beta_o$) zuvor bestimmter sphärischer Koordinaten gebildet werden, die in dem Bezugssystem definiert sind, das als Ursprung den gemeinsamen Fluchtpunkt hat, wobei jedes Paar von Koordinaten (X, Y) mit einem Paar ($\alpha_o$, $\beta_o$) von sphärischen Koordinaten durch eine trigonometrische Funktion F verbunden ist, die als feste Parameter den Kippwinkel ($\varphi$), den Schwenkwinkel ($\theta$) und den Maßstabsfaktor (d) des Quellenbildes hat.

3. Verfahren nach Anspruch 2, **dadurch gekennzeichnet, daß** es, vor dem Laden der Tabelle, die Berechnung der Paare von Koordinaten (X, Y) von Punkten (M) im Quellenbild (I) umfaßt, die mit Paaren von sphärischen Koordinaten ($\alpha_o$, $\beta_o$) verbunden sind; wobei diese Berechnung eine erste und eine zweite Berechnung der ersten und der zweiten Koordinate (X, Y) jedes Punktes (M) des Quellenbildes mit Hilfe der ersten und zweiten trigonometrischen Gleichung enthält, die als Variable die sphärischen Koordinaten ($\alpha_o$, $\beta_o$) haben.

4. Verfahren nach Anspruch 3, **dadurch gekennzeichnet, daß** bei der Berechnung jeden Paares von Koordinaten (X, Y) der Punkte (M) im Quellenbild die erste und die zweite trigonometrische Gleichung folgendermaßen lauten:

$$X = d \cdot \tan A \text{ und } Y = d \cdot \tan B / \cos A ,$$

mit:

$$A = \arctan\left( \frac{\cos\beta_o \cdot \sin(\alpha_o - \theta)}{\cos\beta_o \cdot \cos(\alpha_o - \theta) \cdot \cos\varphi - \sin\beta_o \cdot \sin\varphi} \right)$$

$$B = \arcsin (\cos\beta_o \cdot \cos(\alpha_o - \theta) \sin\varphi + \sin\beta_o \cdot \cos\varphi)$$

5. Verfahren nach einem der Ansprüche 1. bis 4., **dadurch gekennzeichnet, daß** es die Konstruktion eines Zielbildes mit Hilfe einer Vielzahl von geometrischen Transformationen umfaßt, die jeweils auf eine Vielzahl von n angrenzenden Quellenbildern (I1 - In) angewendet werden, die alle ein mit dem Ursprung des Bezugssystems gemeinsames optisches Zentrum haben, wobei das Zielbild angrenzende Bildteile der Quellenbilder darstellt, und mit Modifikationen zumindest eines der folgenden Parameter rekonstruiert ist: Kippwinkel oder Schwenkwinkel und Maßstabsfaktor, in bezug auf jedes der Bildteile der Quellenbilder; inbegriffen das Aufsuchen in der Tabelle der Adresse (X, Y) des Punktes (M) des Quellenbildes, der dem Ausgangsbildpunkt (M∗) des Zielbildes entspricht, verbunden mit dem Aufsuchen, bei der gleichen Adresse dieser Tabelle, eines Indexes, der das spezielle Quellenbild unter den n Quellenbildern angibt, wo dieser Punkt (M) zu finden ist.

6. Verfahren nach einem der Ansprüche 1 bis 5, **dadurch gekennzeichnet, daß** es die Auswertung einer charakteristischen Funktion des digitalen Signals für jeden im Quellenbild (I) berechneten Punkt (M) umfaßt und die Zuordnung dieser charakteristischen Funktion zu jedem entsprechenden Ausgangsbildpunkt (M∗) im Zielbild (I∗).

7. Einrichtung zur Verarbeitung digitaler Bilder, um mit Hilfe einer auf ein sogenanntes Quellenbild (I) angewendeten geometrischen Perspektiventransformation ein berechnetes Bild, ein sogenanntes Zielbild (I∗) zu konstruieren, das das, in bezug auf das Quellenbild, mit Modifikationen von zumindest einem der folgenden Parameter: Kippwinkel, Schwenkwinkel und Maßstabsfaktor rekonstruierte Quellenbild darstellt, **dadurch gekennzeichnet, daß** sie für die Konstruktion eines hinsichtlich Perspektivenfehlern berichtigten und hinsichtlich sphärischen Aberrationen korrigierten Bildes Folgendes umfaßt:

Mittel (201), um das optische Zentrum des Zielbildes (I\*) auf das optische Zentrum (P) des Quellenbildes (I) festzulegen, und um ein orthonormiertes Bezugssystem zu definieren, dessen Ursprung sich im gemeinsamen optischen Zentrum (P) befindet;
einen Adressenberechner (200), einschließlich der Berechnungsmittel (220), um für jeden Bildpunkt, genannt Ausgangsbildpunkt (M∗), mit der Adresse (X∗, Y∗) im Zielbild (I∗) ein im Bezugssystem berechnetes Paar sogenannter sphärischer Koordinaten ($\alpha$, $\beta$) zu liefern, und zwar mit Hilfe der trigonometrischen Funktion, die durch Ausführung eines Verfahrens nach Anspruch 1 berechnet wurde;
sowie Tabellarisierungsmittel (204), um bis auf die Auflösung dieser Tabellarisierungsmittel für jedes berechnete Paar sphärische Koordinaten (α, β) ein gespeichertes Paar (X, Y) zu liefern, das die Adresse eines Punktes (M) im Quellenbild (I) darstellt, der dem Ausgangsbildpunkt (M∗) im Zielbild (I∗) entspricht.

8. Einrichtung nach Anspruch 7, **dadurch gekennzeichnet, daß** sie Mittel zur Auswertung (112) einer charakteristischen Funktion des digitalen Signals umfaßt, das mit jedem im Quellenbild (I) berechneten Punkt (M) verbunden ist, sowie Mittel zur Zuordnung (117) dieser charakteristischen Funktion zu jedem entsprechenden Ausgangsbildpunkt (M*) im Zielbild (I∗).

9. Einrichtung nach einem der Ansprüche 7 oder 8, **dadurch gekennzeichnet, daß** sie Module zur Berechnung trigonometrischer Funktionen umfaßt, die zu Addiereroder Multiplizier- oder. Kehrwertbildnermodulen gehören, um die Berechnung der ersten sphärischen Koordinate (α) mit Hilfe der ersten trigonometrischen Gleichung vorzunehmen, die als Variable die erste Koordinate (X∗) des Ausgangsbildpunkts (M∗) in einem örtlichen System des Zielbildes (I∗) hat, und um die Berechnung der zweiten sphärischen Koordinate (β) mit Hilfe der zweiten trigonometrischen Gleichung vorzunehmen, die als Variable die zweite Koordinate (Y∗) des Bildpunktes (M∗) im örtlichen System hat, gemäß dem Verfahren von Anspruch 1.

10. Einrichtung nach einem der Ansprüche 7 bis 9, **dadurch gekennzeichnet, daß** sie einen Adressengenerator (113) umfaßt, um die Adressen (X∗, Y∗) der Bildpunkte (M∗) des Zielbildes (I∗) in einem örtlichen System zu generieren.

11. Einrichtung nach einem der Ansprüche 7 bis 10, **dadurch gekennzeichnet, daß** sie Speicherungsmittel (210) umfaßt, um Werte für den Kippwinkel (φ∗) und den Schwenkwinkel (θ∗) des Zielbildes (I∗) im Bezugssystem zu liefern, sowie dessen Maßstabsfaktor (d∗) und Speicherungsmittel (201), um dessen Bildeinstellung ($V_x$∗, $V_y$∗) zu liefern.

12. Einrichtung nach einem der Ansprüche 7 bis 11, **dadurch gekennzeichnet, daß** sie Speicherungsmittel (21) umfaßt, um den Kippwinkel (φ), den Schwenkwinkel (θ) und den Maßstabsfaktor (d) des Quellenbildes (I) zu liefern.

13. Einrichtung nach einem der Ansprüche 7 bis 12, **dadurch gekennzeichnet, daß** sie ein Schnittstellenmodul (2) umfaßt, mit dessen Hilfe ein Benutzer Werte für den Kippwinkel (φ∗), den Schwenkwinkel (θ∗), den Maßstabsfaktor (d∗) und für die Bildeinstellung ($V_x$∗, $V_y$∗) des Zielbildes (I∗) eingeben kann.

14. Einrichtung nach einem der Ansprüche 7 bis 13, **dadurch gekennzeichnet, daß** sie Mittel zum Wiedergeben oder Speichern des rekonstruierten Zielbildes (I∗) umfaßt.

15. Einrichtung nach einem der Ansprüche 7 bis 14, **dadurch gekennzeichnet, daß** sie Module für die Bildung einer Vielzahl von n angrenzenden digitalen Quellenbildern (I1 - In) umfaßt, die ein mit dem Ursprung des Bezugssystems gemeinsames optisches Zentrum haben, und daß sie für die Konstruktion eines Zielbildes, das ausgehend von angrenzenden Bildteilen dieser Quellenbilder konstruiert wird, mit Modifikationen zumindest eines der folgenden Parameter: Kippwinkel, Schwenkwinkel und Maßstabsfaktor in bezug auf jedes dieser Bildteile der Quellenbilder, in den Tabellarisierungsmitteln (204), verbunden mit der Adresse (X, Y) eines Bildpunktes (M) in einem speziellen Quellenbild (I1 - In), den Index dieses speziellen Quellenbildes umfaßt, wo dieser Punkt (M) zu finden ist.

## Claims

1. A method of processing a digital image in order to construct, by way of a geometrical perspective transformation applied to an image termed the source image (I), a calculated image, termed the target image (I∗), which represents the source image reconstructed with modifications, at least one of the following parameter = the tilting angle, the panning angle, and possibly of the scale factor in relation to the source image, **characterized in that** it comprises steps for reconstructing the target image (I∗) with rectifications of perspective corrections of spherical aberrations, including:

the determination of a common view point (P) for the source image (I) and the target image (I∗), and of an orthonormal reference frame having this view point P as its origin, and the measurement of the tilting angle (φ∗), panning angle (θ∗) and scale factor (d∗) of the target image (I∗) in this reference frame, the definition of an image (H∗) termed the projection of the target image (I∗), with panning angle (θ∗), tilting angle (φ∗) equal to that of the target image (I∗), with geometrical centre ($\Omega_H$∗) aligned with the optical axis (PZ∗) of the target image, and with the same framing (2$V_x$∗, 2$V_y$∗) as the target image (I∗), so that every pixel (M*) with address (X*, Y*) in the target image (I*) has a counterpart by projection (M_H*) with the same address (X*, Y*) in the projection image (H*), the projection plane (H) of the target image (I*) according to the projection image (H*) being situated at a distance from the origin (P) of the reference frame which is equal to the scale factor (d*) of the target image,

the calculation, for every pixel termed the starting pixel (M*) with address (X*, Y*) in the target image, of a pair of so-called spherical coordinates ($\alpha$, $\beta$) defining, in the reference frame, the ray linking the origin (P) to the counterpart pixel (M_H*), situated in the projection image (H*), by means of a trigonometric function such that: $(\alpha, \beta) = G^{-1}(X*, Y*)$, which calculation comprises a first and a second calculation of the first and of the second spherical coordinates ($\alpha$, $\beta$) by means of a first and a second trigonometric relation of the first and of the second coordinate of the counterpart pixel (M_H*) by projection in the projection image (H*) of the starting pixel (M*), which trigonometric relations have as coefficients functions of the tilting angle ($\varphi*$), the panning angle ($\theta*$) and the scale factor (d*) of the target image (I*), so that these trigonometric relations are:

$$\alpha = A* + \theta* \text{ and } \beta = \arctan[(Y* - Yo)(\cos A*)/d*]$$

with

$$A* = \arctan(X*/d*) \text{ and } Yo = d* . \tan \varphi*$$

the reading, from a table, by matching to within the resolution of the table, of the calculated pair of spherical coordinates ($\alpha$, $\beta$) with one of the addresses ($\alpha_o$, $\beta_o$) of the table, of a pair (X,Y) which is stored therein and constitutes the address of a point (M) in the source image (I) corresponding to the starting pixel (M*) in the target image (I*).

2. A method as claimed in Claim 1, **characterized in that** it comprises the loading of the table, in an initial step, with pairs of coordinates (X,Y) of points (M) which are defined in a local frame of the source image (I) and are stored at addresses of this table which are formed by pairs ($\alpha_o$, $\beta_o$) of predetermined spherical coordinates defined in the reference frame having the common view point as its origin, each pair of coordinates (X, Y) being linked to a pair ($\alpha_o$, $\beta_o$) of spherical coordinates by a trigonometric function F having its as fixed parameters the tilting angle ($\varphi$), the panning angle ($\theta$) and the scale factor (d) of the source image.

3. A method as claimed in Claim 2, **characterized in that** it comprises the calculation, prior to the loading of the table, of the pairs of coordinates (X,Y) of points (M) in the source image (I) which are linked to the pairs of spherical coordinates ($\alpha_o$, $\beta_o$), this calculation including a first and a second calculation of the first and of the second coordinates (X,Y) of each point (M) of the source image by means of a first and a second trigonometric relation having as variables the spherical coordinates ($\alpha_o$, $\beta_o$).

4. A method as claimed in Claim 3, **characterized in that** in the calculation of each pair of coordinates (X,Y) of points (M) in the source image the first and second trigonometric relations are

$$X = d . \tan A \text{ and } Y = d . \tan B/\cos A, \text{ with}$$

$$A = \arctan\left[\frac{\cos\beta_o . \sin(\alpha_o - \theta)}{\cos\beta_o . \cos(\alpha_o - \theta) . \cos\varphi - \sin\beta_o . \sin\varphi}\right]$$

$$B = \arcsin(\cos\beta_o . \cos(\alpha_o . \theta)\sin\varphi + \sin\beta_o . \cos\varphi$$

5. A method as claimed in one of the Claims 1 to 4, **characterized in that** it comprises the construction, by means of a plurality of geometrical transformations applied to a plurality of n adjacent source images (I1-In), all having a view point common with the origin of the reference frame, of a target image which represents adjacent sub-portions of the source images and which is reconstructed with modifications of at least one of the following parameters: the tilting angle or the panning angle and the scale factor in relation to each of these sub-portions of source images, comprising the reading, from the table, of the address (X,Y) of the point (M) of the source image corresponding to the starting pixel (M∗) of the target image, associated with the reading at the same address of this table of an index indicating the particular source image out of the n source images where this point (M) lies.

6.  A method as claimed in one of the Claims 1 to 5, **characterized in that** it comprises the evaluation of a function characteristic of the digital signal of every point (M) calculated in the source image (I), and the allocating of this characteristic function to each corresponding starting pixel (M∗) in the target image (I∗).

7.  A device for processing digital images in order to construct, by means of a geometrical perspective transformation applied to an image termed the source image (I), a calculated image termed the target image (I∗) which represents the source image reconstructed with modifications of at least one of the following parameters: the tilting angle, the panning angle and the scale factor in relation to the source image, **characterized in that** for the construction of an image rectified for perspective faults and corrected for spherical aberrations it comprises:

    means (201) for locking the optical center of the target image (I∗) onto the view point (P) of the source image (I) and for defining an orthonormal reference frame whose origin is situated at the common optical center (P);
    an address calculator (200) including means of calculation (220) for providing for each pixel, termed the starting pixel (M∗) with address (X∗,Y∗) in the target image (I∗), a so-called spherical coordinate pair ($\alpha$, $\beta$), calculated in the reference frame, by means of the trigonometric function calculated by implementing a method as claimed in Claim 1 and
    tabulation means (204) for providing, to within the resolution of these tabulation means, for each calculated pair of spherical coordinates ($\alpha$, $\beta$) a pair (X,Y) which is stored and constitutes the address in the source image (I) of a point (M) corresponding to the starting pixel (M∗) in the target image (I∗).

8.  A device as claimed in Claim 7, **characterized in that** it comprises means of evaluation (112) of a function characteristic of the digital signal linked to every point (M) calculated in the source image (I), and means of allocating (117) this characteristic function to each corresponding starting pixel (M∗) in the target image (I∗).

9.  A device as claimed in one of the Claims 7 or 8, **characterized in that** it comprises modules for calculating trigonometric functions which are associated with adder or multiplier or inverter modules for implementing the calculation of the first spherical coordinate ($\alpha$) by means of the first trigonometric relation having as its variable the first coordinate (X∗) of the starting pixel (M∗), in a local frame of the target image (I∗), and for implementing the calculation of the second spherical coordinate ($\beta$) by means of the second trigonometric relation having as its variable the second coordinate (Y∗) of the pixel (M∗) in this local frame, by means of the method of Claim 1.

10. A device as claimed in one of Claims 7 to 9, **characterized in that** it comprises an address generator (113) for generating the addresses (X∗, Y∗) of the pixels (M∗) of the target image (I∗) in a local frame.

11. A device as claimed in one of Claims 7 to 10, **characterized in that** it comprises storage means (210) for providing the values of the tilting angle ($\varphi$∗) and the panning angle ($\theta$∗) of the target image (I∗) in the reference frame, and its scale factor (d∗) and storage means (201) for providing its framing ($V_x$∗, $V_y$∗).

12. A device as claimed in one of the Claims 7 to 11, **characterized in that** it comprises storage means (21) for providing the tilting angle ($\varphi$), the panning angle ($\theta$) and the scale factor (d) of the source image (I).

13. A device as claimed in one of the Claims 7 to 12, **characterized in that** it comprises an interface module (2) by means of which a user can prescribe values for the tilting angle ($\varphi$∗), the panning angle ($\theta$∗), the scale factor (d∗), and for the framing ($V_x$∗, $V_y$∗) of the target image (I∗).

14. A device as claimed in one of the Claims 7 to 13, **characterized in that** it comprises means for displaying or storing the reconstructed target image (I∗).

15. A device as claimed in one of the Claims 7 to 14, **characterized in that** it comprises modules for forming a plurality of n adjacent digital source images (I1-In) having optical centers which are common with the origin of the reference frame, and **in that**, in order to construct a target image constructed from adjacent portions of these source images, with modifications of at least one of the following parameters: the tilting angle, the panning angle and the scale factor in relation to each of these portions of source images, it comprises, in the tabulation means (204), associated with the address (X,Y) of a pixel (M) in a particular source image (I1-In), the index of this particular source image in which this point (M) lies.

FIG. 1A

FIG. 1B

FIG. 2A

FIG. 2B

FIG. 3A

FIG. 3B

FIG. 4A

FIG. 4B

FIG. 5A

FIG. 5B

FIG. 6A

FIG. 6B

## FIG.7

## FIG.15

FIG. 8A

FIG. 8B

FIG. 9A

FIG. 9B

FIG. 10B  FIG. 10A

FIG. 10C

FIG. 11A  FIG. 11B

FIG. 12A   FIG. 12B   FIG. 12C   FIG. 12D

FIG. 13

FIG. 14